# EUROPÄISCHE PATENTSCHRIFT

(11) **EP 3 389 375 B1**
(45) Veröffentlichungstag und Bekanntmachung des Hinweises auf die Patenterteilung: **23.02.2022**
(21) Anmeldenummer: 16825726.9
(22) Anmeldetag: 19.12.2016
(51) Int. Cl.: A01M 1/02, A01M 1/10, A01M 1/20

(54) **VERFAHREN ZUM SCHUTZ VON HONIGBIENEN VOR RÄUBERISCHEN INSEKTEN**
METHOD FOR PROTECTING HONEYBEES FROM PREDATORY INSECTS
PROCÉDÉ POUR LA PROTECTION DES ABEILLES MELLIFÈRES CONTRE DES INSECTES PRÉDATEURS

(30) Priorität: 18.12.2015 DE 102015122279
(43) Veröffentlichungstag der Anmeldung: 24.10.2018
(73) Patentinhaber: Mohos, Zoltán & Zagni, Fabrizio GbR, 50259 Pulheim (DE)
(72) Erfinder: ZAGNI, Fabrizio, 18030 Airole (IM) (IT)
(74) Vertreter: Geskes, Christoph
(86) Internationale Anmeldenummer: PCT/EP2016/081806
(87) Internationale Veröffentlichungsnummer: WO 2017/103284

(56) Entgegenhaltungen:
- EP-A1- 2 883 452
- WO-A1-02/43481
- DE-A1-102005 022 147
- FR-A1- 2 987 973
- FR-A1- 3 025 978
- GB-A- 191 410 226

## Beschreibung

Die Erfindung betrifft ein Verfahren zum Schutz von Honigbienen, eine Vorrichtung zur Durchführung des Verfahrens, sowie die Verwendung einer Substanz zum Schutz von Honigbienen.

Eingeschleppte Tierarten bzw. Insektenarten stören häufig das ökologische Gleichgewicht in einem Ökosystem. Die importierte asiatische Wespe beispielsweise verspeist heimische Insekten und insbesondere Bienen. Heimische Bienen haben keine wirksamen Abwehrmechanismen gegen die asiatische Wespe. Diese bedroht damit nicht nur den Honigbienenbestand von Imkern, sondern auch den Wildbienenbestand und die Vielfalt heimischer Insekten. Bienen sind für die Bestäubung von Wildpflanzen und Nutzpflanzen sehr wichtig. Ein Rückgang des Bienenbestands führt durch einen geringen Honigertrag sowie durch Ernterückgänge zu wirtschaftlichen Schäden bei Imkern und Bauern.

Insektizide Substanzen sind bekannt. Häufig werden diese auf ein Lockmittel aufgebracht, beispielsweise Futter. Um Bienenstöcke zu schützen wurden beispielsweise Fleischstücke, die mit derartigen Substanzen versetzt sind, in der Nähe von Bienenstöcken verteilt. Räuberische Insekten, wie die asiatische Wespe, verspeisen diese und verenden schließlich. Jedoch können weiterhin Insekten nachkommen, die die Bienen angreifen können. Ferner könnten auch sonstige Lebewesen, insbesondere Nutztiere, die Substanz aufnehmen und erkranken oder sterben.

Es ist auch bekannt, eine Insektenfalle aufzustellen und dann mehrere gefangene Insekten mit Insektizid zu benetzen. Hierfür werden die Insekten in einen Behältnis mit Insektizid gegeben und z.B. geschüttelt. Hierbei kann kein selektiver Auftrag der Substanz erfolgen. Ein erhöhter Verbrauch der Substanz ist die Folge, zudem sterben die behandelten Insekten unter Umständen schnell, insbesondere bevor diese ihr Nest erreichen. Die verendeten Insekten können von anderen Tieren gefressen werden, die dadurch erkranken oder sterben. Die Substanz kann derart ungewollt in der Umwelt verteilt werden und Schäden verursachen.

Ferner ist aus FR 3 025 978 A1, veröffentlicht am 25. März 2016, eine Vorrichtung zur Dezimierung von Hornissen bekannt. Aus FR 2 987 973 A1 ist eine Vorrichtung zur Zerstörung von Kolonien von Wespen und Hornissen bekannt. Aus WO 02/43481 A1 ist ein Verfahren und eine Vorrichtung zur Kontrolle beziehungsweise zur Ausrottung einer Wespenpopulation bekannt. Aus DE 10 2005 022 147 A1 sind insektizide Wirkstoffkombinationen bekannt. Aus GB 10226 A ist ein Netz für Insekten bekannt. Aus EP 2 883 452 A1 ist eine Falle für Insekten bekannt.

Es ist Aufgabe der Erfindung ein verbessertes Verfahren zum Schutz von Honigbienen, insbesondere heimischen Honigbienen, zur Verfügung zu stellen, dass einen besonders, insbesondere in Hinblick auf Kosten, effektiven bzw. effizienten, sowie umweltschonenden und gezielten Einsatz einer insektiziden Substanz ermöglicht.

Die Aufgabe wird erfindungsgemäß gelöst durch das Verfahren gemäß Anspruch 1, die Vorrichtung gemäß Anspruch 8 und durch die Verwendung einer Substanz gemäß Anspruch 12.

Gemäß dem erfindungsgemäßen Verfahren zum Schutz von Honigbienen vor räuberischen Insekten wird mindestens eines der Insekten gefangen und zumindest teilweise immobilisiert. Ferner wird an einer Körperstelle mindestens eine auf dem Insekt haftende insektizide Substanz derart aufgebracht, dass das Insekt die Substanz nicht, bevorzugt zumindest nicht vollständig, entfernen kann. Erfindungsgemäß wird auf die Brust des Insekts mindestens eine auf dem Insekt haftende insektizide Substanz aufgebracht, damit das Insekt die Substanz nicht vollständig entfernen kann. Anschließend wird das Insekt mobilisiert.

Mit teilweiser Immobilisierung ist bevorzugt im Sinne der Erfindung definiert, dass sich das Insekt vorübergehend, d. h. zumindest kurzzeitig, nicht selbst fortbewegen kann. Das bedeutet, dass beispielsweise mittels einer Vorrichtung beziehungsweise eines Haltemittels eine Haltung des Insekts über zumindest einen kurzen Zeitraum, wie von etwa 0,5s bis etwa 30s, erfolgt.

Alternativ kann die Fortbewegungsgeschwindigkeit des Insekts stark reduziert werden, so dass das Insekt beispielsweise vorübergehend nicht schnell krabbeln oder fliegen, sondern lediglich langsam kriechen kann. Das bedeutet, dass beispielsweise mittels eines verengten Durchgangs, durch den das insekt geführt wird, eine Reduzierung der Fortbewegungsgeschwindigkeit des Insekts erfolgt.

Das mobilisierte Insekt kann die Substanz zumindest nicht vollständig selbst aufnehmen, d.h. verspeisen. Es wird zu seinem Nest bzw. seiner Kolonie zurückkehren und das Insektizide dort auf eine Mehrzahl seiner Artgenossen verteilen bzw. übertragen, die wiederum das Insektizid weiterverteilen und/oder aufnehmen. Letztlich entfaltet das Insektizid derart seine Wirkung bei einer Vielzahl im Nest lebender Insekten. Denn gesellschaftliche organisierte räuberische Insekten, wie z.B. die Hornisse und Wespen, insbesondere die Vespa Velutina und die Vespa Crabro, kommunizieren insbesondere unteren anderem über Berührungen. Vorteilhafterweise kann durch den gezielten Auftrag des Insektizids auf ein Insekt, ohne dass dieses selbst das Insektizide, zumindest nicht vollständig, aufnehmen kann, dieses als Träger bzw. Multiplikator verwendet werden. Durch das erfindungsgemäße Verfahren kann Insektizid besonders effektiv und effizient eingesetzt werden. Außerdem wird verhindert, dass sonstige, nicht selektierte Lebewesen die Substanz aufnehmen. Gemäß den erfindungsgemäßen Verfahren erfolgt ein zielgerichteter Auftrag der Substanz auf ein selektiertes immobilisiertes Insekt.

Bei Wiederholungen des erfindungsgemäßen Verfahrens können alle im Nest lebenden Insekten mit Insektizid behandelt werden, so dass keine Versorgung der Insektennachkommen statt findet und die Insektenkolonie insgesamt terminiert ist. So können auch schwer zugängliche Nester und Nester mit noch unbekanntem Standort mit Insektizid behandelt werden.

Besonders bevorzugt wird die Substanz derart auf das Insekt aufgetragen, dass dieses selbst die Substanz nicht entfernen kann und insbesondere nicht selbst oral aufnehmen kann. Bevorzugt wird das Insektizid bzw. die Substanz auf die Brust des Insekts aufgetragen. Bei Insekten sind die Extremitäten einschließlich der eventuell vorhandenen Flügel an der Brust angeordnet. Hierbei sind die Beine auf einer Unterseite der Brust angeordnet. An der Oberseite der Brust sind die Flügel angeordnet. Diese ist der Unterseite der Brust abgewandt. Durch die Anatomie der Insekten können diese zwar mittels der Beine ihren Kopf und ihr Unterteil erreichen, aber nicht die Oberseite der Brust. Besonders bevorzugt wird das Insektizid deshalb auf die Oberseite der Brust aufgetragen. Weiterhin bevorzugt wird das Insektizid auf die Brust zwischen Kopf und Hinterleib, weiter bevorzugt zwischen Kopf und dem Bereich der Flügelansätze des Insekts, weiter bevorzugt im Bereich der Flügelansätze, aufgetragen.

Die Substanz umfasst bevorzugt mindestens eine chemisch aktive Verbindung. Diese ist bevorzugt aus einer Gruppe umfassend Neonicotinoide ausgewählt. Das mindestens eine Neonicotinoid ist bevorzugt aus einer Gruppe umfassend Imidacloprid und Acetamiprid ausgewählt sein. Die Substanz kann eine chemische aktive Verbindung natürlichen Ursprungs umfassen. Die Substanz kann Pilze, Pilzsporen und/oder sonstige Sporen umfassen.

Die chemisch aktive Verbindung wird bevorzugt in einer Menge in einem Bereich von etwa 0,001mg bis etwa 1 mg, weiter bevorzugt in einer Menge in einem Bereich von etwa 0,005 mg bis etwa 0,8 mg, noch weiter bevorzugt in einer Menge in einem Bereich von etwa 0,01 mg bis etwa 0,5 mg, auf der Körperstelle aufgebracht. Diese Menge ist eine tödliche Dosis für mehrere Insekten. Beispielsweise wird eine Menge von etwa 0,1 mg aufgebracht.

Besonders bevorzugt wird die Substanz in einer Menge in einem Bereich von etwa 0,2 mg bis etwa 20 mg, weiter bevorzugt in einer Menge in einem Bereich von etwa 0,4 mg bis etwa 15 mg, noch weiter bevorzugt in einer Menge in einem Bereich 0,5 mg bis etwa 10 mg, auf dem Insekt, d.h. auf der Körperstelle des Insekts, aufgebracht. Diese Menge umfasst eine tödliche Dosis für mehrere Insekten. Beispielsweise wird eine Menge von etwa 5 mg aufgebracht.

Die Substanz kann mittels eines Applikators aufgetragen werden. Dies ermöglicht vorzugsweise ein genaues Dosieren der Substanz. Besonders bevorzugt wird die Substanz mittels einer Spritze, insbesondere ohne Kanüle, auf dem Insekt aufgebracht. Die Substanz kann ergänzend oder alternativ mittels einer Pumpe, insbesondere einer Mikropumpe auf das Insekt aufgebracht werden. Mittels der Pumpe ist eine genaue Dosierung der Substanz erreichbar. Denkbar sind auch Applikatoren zur einmaligen Verwendung, die nur eine Dosis enthalten. Beispielsweise können Ampullen verwendet werden.

Die Substanz kann automatisiert dosiert und ausgetragen werden. Hierfür kann beispielsweise ein Applikator bzw. eine Spritze und/oder Pumpe, insbesondere mit einem Reservoir zur Bevorratung der Substanz, verwendet werden, die nach Betätigung durch einen Benutzer oder vollautomatisiert, beispielsweise mittels einer Pumpe, eine festlegbare Dosis der Substanz abgibt bzw. aufträgt. Das Reservoir kann vor eine Sicherheitsvorrichtung gegen eine Fremdeinwirkung von Wildtieren umfassen.

Bevorzugt erfolgt die zumindest teilweise Immobilisierung durch Halten des Insektes mit einem Haltemittel, wobei das Haltemittel zueinander bewegliche Teile aufweist. Das Haltemittel kann ausgebildet sein, um das Insekt zumindest teilweise zu umschließen und form- und/oder kraftschlüssig zu immobilisieren. Das Haltemittel kann beispielsweise zangen-, pinzetten- und/oder pinselartig ausgebildet sein. Auf dem immobilisierten Insekt kann dann die Substanz wie beschrieben zielgerichtet aufgetragen werden.

Alternativ oder ergänzend kann die Immobilisierung in Sinne einer Verlangsamung der Fortbewegungsgeschwindigkeit durch Führung des Insektes in einen Durchgang mit geeignet verringertem Querschnitt im Vergleich zu einem Aufbewahrungsmittel für das Insekt erfolgen. Die Führung des Insektes kann dabei von einem ersten röhrenförmigen Abschnitt eines Aufbewahrungsmittels für das Insekt in einen Durchgang eines zweiten röhrenförmigen Abschnitts des Aufbewahrungsmittels erfolgen, der mit einem verringertem Querschnitt im Vergleich zum ersten röhrenförmigen Abschnitt des Aufbewahrungsmittels ausgebildet ist. Durch den verringerten Querschnitt kann die Bewegungsgeschwindigkeit und - freiheit minimiert werden, um die Substanz zielgerichtet auftragen zu können. Der Durchgang kann ein Teil eines Haltemittels bilden, wobei der Querschnitt des Durchgangs zur Immobilisierung verringert wird. Der Durchgang bzw. das Haltemittel kann entsprechend zueinander bewegliche Teile aufweisen. Der Durchgang bzw. das Haltemittel kann ein elastisches und/oder biegsames Material umfassen. Beispielsweise kann ein dünner Kunststofffilm verwendet werden. Der Durchgang kann jedoch auch starr ausgebildet sein.

Eine erfindungsgemäße Vorrichtung zur Durchführung des vorbeschriebenen erfindungsgemäßen Verfahrens umfasst ein Aufbewahrungsmittel mit einem röhrenförmigen ersten Abschnitt und einen röhrenförmigen zweiten Abschnitt, wobei vor dem ersten Abschnitt eine Falle für das Insekt angeordnet ist. Der zweite Abschnitt ist zumindest teilweise im Querschnitt im Vergleich zum ersten Abschnitt verengt. Der zweite Abschnitt weist vorzugsweise eine Ausgangsöffnung auf. Der zweite Abschnitt kann einen sich in Richtung der Ausgangsöffnung zumindest teilweise aufweitenden Querschnitt aufweisen, damit die Insekten instinktiv in Richtung der Ausgangsöffnung krabbeln. Der zweite Abschnitt kann sich beispielsweise in Richtung der Ausgangsöffnung kontinuierlich verbreitern. Der zweite Abschnitt kann sich beispielsweise trichterförmig beziehungsweise trapezförmig zur Ausgangsöffnung hin verbreitern. Selbiges gilt für ein Bodenteil des zweiten Abschnitts. Alternativ kann sich der Querschnitt des zweiten Abschnitts zur Ausgangsöffnung hin verschmälern.

Das Aufbewahrungsmittel ist bevorzugt zumindest teilweise hohl ausgebildet. Es kann bildlich gesprochen als liegender Aufnahmebehälter ausgebildet sein, d.h. der Aufnahmebehälter kann im Wesentlichen horizontal ausgerichtet sein. Besonders bevorzugt ist das Aufbewahrungsmittel im Wesentlichen vertikal ausgerichtet, wobei der zweite Abschnitt über dem ersten Abschnitt angeordnet ist, um zu nutzen, dass Insekten instinktiv nach oben krabbeln. Das Aufbewahrungsmittel kann schräg, beispielsweise in einem Winkel von 30° bis 40°, angeordnet sein, wobei der zweite Abschnitt zumindest teilweise über dem ersten Abschnitt angeordnet ist.

Der Aufnahmebehälter bzw. das Aufbewahrungsmittel weist bevorzugt eine verschließbare Eingangsöffnung für Insekten auf. Diese ist bevorzugt im ersten Abschnitt angeordnet. Die Eingangsöffnung kann beispielsweise mittels eines Verschlussmittels verschließbar ausgebildet sein. Beispielsweise kann diese mittels eines Deckels, Stopfens, einer Klappe oder einer Schiebetür verschließbar sein. Der erste Abschnitt kann im Bereich der Eingangsöffnung Befestigungsmittel wie Gewinde und Gummiringe u.Ä. umfassen.

Der erste Abschnitt ist besonders bevorzugt zumindest teilweise abgedunkelt, d.h. lichtundurchlässig, bevorzugt vollständig lichtundurchlässig, ausgebildet. Vorzugsweise ist der zweite Abschnitt zumindest teilweise nicht abgedunkelt, d.h. lichtdurchlässig ausgebildet und ist bevorzugt vollständig lichtdurchlässig ausgebildet. Ein im ersten Abschnitt angeordnetes Insekt wird sich instinktiv zum lichtdurchlässigen Teil der Vorrichtung bewegen. Beispielsweise kann der erste Abschnitt aus einem lichtundurchlässigen Kunststoff gebildet sein. Denkbar ist auch eine abnehmbare separate Abdeckung, beispielsweise eine Textil- oder Pappabdeckung. Der zweite Abschnitt kann aus einem lichtdurchlässigen Kunststoff oder Glass ausgebildet sein. Beispielsweise kann der zweite Abschnitt zumindest eine, vorzugsweise mindestens drei, lichtdurchlässige Wandungen aufweisen. Alternativ kann im zweiten Abschnitt eine Lichtquelle, wie eine LED-Lichtquelle, angeordnet sein, um Insekten anzulocken. Der zweite Abschnitt weist eine Ausgangsöffnung für Insekten auf. Diese kann verschließbar ausgebildet sein.

Der erste Abschnitt kann separat und abnehmbar vom zweiten Abschnitt ausgebildet sein. Der ersten und der zweite Abschnitt können einander zugeordnete Durchgangsöffnungen aufweisen. Diese können verschließbar ausgebildet sein.

Der erste Abschnitt kann einen trichterförmigen Abschnitt aufweisen, der zum zweiten Abschnitt hin sich verengt bzw. im zweiten Abschnitt mündet. Der erste Abschnitt kann einen kreisförmigen Querschnitt aufweisen bzw. zylinderförmig ausgebildet sein. Denkbar sind jedoch auch vieleckige Querschnitte. Der erste Abschnitt kann beispielsweise quaderförmig ausgebildet sein. Zwischen dem ersten Abschnitt und dem zweiten Abschnitt kann mindestens ein Adapterteil angeordnet sein. Dieses Adapterteil kann besondere dem zweiten Abschnitt zugeordnet sein. Im Bereich des Adapters kann die Durchgangsöffnung des zweiten Abschnitts ausgebildet sein. Das Adapterteil ist bevorzugt plattenförmig ausgebildet und rechtwinklig zur Längserstreckung des Aufbewahrungsmittels angeordnet. Derart können unterschiedlichen Formen und Größen von Durchgangsöffnungen durch das Adapterteil ausgeglichen werden. Ein Spalt zwischen den Abschnitten entsteht nicht.

Der zweite Abschnitt kann wie der erste Abschnitt ausgebildet sein. Der zweite Abschnitt weist bevorzugt ein zur zumindest teilweisen Immobilisierung des Insektes bewegbares Immobilisierungsmittel auf. Der zweite Abschnitt weist bevorzugt mindestens eine Öffnung zur Aufbringung der Substanz auf. Der zweite Abschnitt kann also als Durchgang und/oder als Haltemittel ausgebildet sein, beziehungsweise ein Haltemittel umfassen. Der zweite Abschnitt ist vorzugsweise als Fixierkanal mit beweglichen Teilen ausgebildet. Alternativ kann der zweite Abschnitt als ein vorbeschriebener Durchgang ohne bewegliche Teile ausgebildet sein.

Der Fixierkanal ist vorzugsweise zumindest zweiteilig ausgebildet. Der Fixierkanal weist bevorzugt ein Bodenteil und ein Kanaldach auf. Das Kanaldach und das Bodenteil sind bevorzugt zueinander beweglich ausgebildet, so dass der Querschnitt, beziehungsweise die Höhe des Fixierkanals verringert werden kann. Bevorzugt ist der Querschnitt in einer Fixierstellung des Haltemittels kleiner als in einer Ausgangsstellung. Das Kanaldach und der Bodenteil bilden vorzugsweise einen zumindest teilweise geschlossenen Kanal bzw. Durchgang der in der Ausgangsöffnung des zweiten Abschnitts mündet. Alternativ oder ergänzend kann der Fixierkanal zumindest zwei Seitenflächen aufweisen, die bevorzugt zueinander beweglich ausgebildet sind, so dass ein Insekt zwischen den Seitenflächen immobilisiert werden kann. Mittels den vorgenannten beweglichen Bauteilen, wie Kanaldach, Bodenteil und/oder Seitenflächen, ist auch eine Verstellbarkeit an verschiedene Insektenarten realisierbar. Diese Bauteile können zur Anpassung an die Abmaße von verschiedenen Insekten zueinander und/oder auseinander bewegt und dann arretiert werden. Das bedeutet, dass der Querschnitt des zweiten Abschnitts an verschiedene Abmaße von Insektenarten anpassbar ist. Für eine Immobilisierung des Insekts können die Bauteile dann zumindest teilweise weiter zueinander hin bewegt werden.

Der Fixierkanal bzw. der zweiten Abschnitt kann vorzugsweise ein Haltemittel mit zumindest zwei zueinander beweglich ausgebildeten Seitenflächen beziehungsweise Backen umfassen. Krabbelt das Insekt nun auf dem Weg zur Ausgangsöffnung zwischen diese Seitenflächen, bewegen diese sich aufeinander zu und immobilisieren das Insekt. Das Haltemittel kann vorzugsweise in Bezug auf den zweiten Abschnitt beweglich ausgebildet sein und aus dem zweiten Abschnitt, beispielsweise durch die Ausgangöffnung heraus, bewegbar sein. Vorteilhafterweise kann derart die Applikation der Substanz außerhalb des Aufbewahrungsmittels erfolgen, so dass hierfür keine Öffnung im zweiten Abschnitt notwendig ist und eine Verunreinigung der Vorrichtung durch die Substanz ausgeschlossen ist. Die beweglichen Seitenflächen können beispielsweise Teil eines zangen- bzw. pinzettenartigen Haltemittels sein.

Das Bodenteil weist bevorzugt eine oberseitige ebene Bodenfläche als Krabbeluntergrund für Insekten auf. Die Bodenfläche des Bodenteils ist vorzugsweise rau ausgebildet. Das Bodenteil ist bevorzugt quaderförmig ausgebildet weist neben der oberseitigen Bodenfläche zwei kurze sowie zwei längliche Seitenflächen und eine Unterseite auf. Vorzugsweise ist die Bodenfläche des Bodenteils vom Kanaldach zumindest teilweise umschlossen. Ferner können die länglichen Seitenflächen vom Kanaldach umschlossen sein. Das Bodenteil kann ein Gitter und/oder Netz umfassen oder ähnliche Kletterhilfen. Das Gitter oder Netz kann derart ausgebildet sein, das kleine Insekten wie Bienen hindurch kriechen können, aber größere Insekten wie die Vespa Velutina oder Vespa Crabro nicht.

Das Kanaldach ist bevorzugt einteilig ausgebildet, um eine einfache Herstellung zu ermöglichen. Besonders bevorzugt ist das Kanaldach als Profil herstellbar, insbesondere als ein Kunststoffprofil. Bevorzugt ist das Kanaldach als umgedrehtes U-profil ausgebildet. Das Kanaldach weist vorzugsweise zumindest zwei parallele gerade Seiten auf, um eine einfache verschiebbare und/oder verdrehbare Anordnung im Haltemittel zu ermöglichen. Das Kanaldach weist bevorzugt zumindest eine gebogene Seite auf. Diese kann insbesondere halbrund bzw. halbkreisförmig gebogen sein. Das Kanaldach kann insbesondere an die Kontur einer Insektenart angepasst sein, insbesondere der Kontur der Brust des Insektes. Durch eine derartige Formung des Kanaldaches wird erreicht, dass das Insekt insbesondere immer mit seiner Brust zum Kanaldach positioniert ist und mit der Unterseite auf dem gegenüberliegen Boden beziehungsweise Bodenteil. Hierdurch ist daher eine für den Auftrag der Substanz optimale Positionierung des Insekts erreichbar. Das Kanaldach weist vorzugsweise eine die parallelen Seiten verbindende Seite auf. Dies ist bevorzugt die gebogene Seite. Die gebogene Seite ist vorzugsweise kontinuierlich gebogen ausgebildet. Alternativ oder ergänzend kann die gebogene Seite auch Kanten aufweisen. Die parallelen geraden Seiten liegen bevorzugt an den länglichen Seitenflächen des Bodenteils an. Die gebogene Seite ist vorzugsweise von der Bodenfläche beabstandet.

Das Kanaldach kann mehrteilig ausgebildet sein. Das Kanaldach kann aus mehreren, insbesondere axial beabstandeten Profilen ausgebildet sein. Diese können wie zum einteiligen Kanaldach beschrieben ausgebildet sein. Das Kanaldach kann entsprechend insbesondere mehrere beabstandete Bögen aufweisen mit zumindest zwei beabstandeten geraden Bogenabschnitte und zumindest einen gebogenen Bogenabschnitt. Die Bögen können aus Kunststoff ausgebildet sein. Die Bögen können aus Metall ausgebildet sein. Beispielsweise kann ein Bogen einen, vorzugsweise zumindest zwei, gebogene Metallnägel umfassen. Diese können jeweils einen gebogenen endseitigen Bodenabschnitt aufweisen. Die Nägel können zueinander spiegelbildlich angeordnet sein, so dass die gebogenen Bodenabschnitte einander zugewandt sind oder sich berühren.

Das Kanaldach kann gitterförmig ausgebildet sein. Das Kanaldach kann beispielsweise aus gebogenen Draht bzw. Gitterdraht oder Folie ausgebildet sein.

Die Ausgangsöffnung und/oder der zweite Abschnitt im Bereich der Ausgangsöffnung können Verschluss- und Befestigungsmittel aufweisen, wie die in Bezug auf die Eingangsöffnung des ersten Abschnitts genannten.

Der erste Abschnitt und/oder der zweite Abschnitt können auf einem Träger angeordnet sein. Der Träger weist bevorzugt eine flache Oberseite auf. Der Träger ist vorzugsweise plattenförmig, weiter bevorzugt rechteckig, ausgebildet. Der Träger ist bevorzugt aus einem starren Material ausgebildet. Beispielsweise kann der Träger aus Kunststoff, Metall oder Holz ausgebildet sein.

Das Kanaldach und das Bodenteil sind bevorzugt zueinander verschiebbar und/oder verdrehbar angeordnet. Hierfür kann der Träger Führungskanäle zur zumindest teilweisen Aufnahme des Kanaldaches und ergänzend auch zumindest teilweisen Aufnahme des Adapterteils aufweisen. Beispielsweise kann der Träger Führungskanäle aufweisen, um zumindest einen Teil der beabstandeten Bögen eines entsprechend ausgebildeten Kanaldachs verschieb- und/oder verdrehbar in aufzunehmen. Die Führungskanäle können zumindest teilweise korrespondierend zu den parallelen geraden Seiten bzw. Bogenabschnitten des Kanaldaches und/oder zu dem Adapterteil ausgebildet sein. In einer Ausgangsstellung der Vorrichtung stößt das Insekt bevorzugt nicht an die halbrunde Seite des Kanaldachs bzw. die gebogene Seite eines Bogens an. Hierdurch wird sichergestellt, dass die Substanz nicht auf weiteren Körperteilen des Insekts verteilt wird, die durch die Extremitäten des Insekts erreichbar wären.

Der Träger ist bevorzugt von einem Untergrund beabstandbar. Hierfür weist der Träger bevorzugt vier randseitig angeordnete Stumpfe auf, die unterseitig am Träger angeordnet sind.

Unterhalb des Trägers kann eine Aufnahme angeordnet sein. An der Aufnahme können zumindest teilweise das Adapterstück und/oder das Kanaldach angeordnet bzw. befestigt sein. Beispielsweise können zumindest ein Teil der Bögen eines mehrteiligen Kanaldachs auf der Aufnahme angeordnet bzw. befestigt sein. Die Aufnahme ist bevorzugt als eine flache Platte ausgebildet. Die Aufnahme kann auch zylinderförmig ausgebildet sein. Die Aufnahme ist vorzugsweise vom Träger beanstandet. Die Aufnahme kann beispielsweise mittels eines Gelenkstücks von einer Unterseite des Trägers beabstandet sein. Die Aufnahme ist vorzugsweise in einer Ausgangsstellung parallel zum Träger angeordnet. Die Aufnahme ist in Bezug auf den Träger zumindest in eine Fixierstellung verschiebbar und/oder drehbar. Die Aufnahme ist vorzugsweise aus einem starren Material, z.B. aus Kunststoff, ausgebildet. Die Aufnahme kann jedoch alternativ flexibel ausgebildet sein, insbesondere aus einem biegsamen Material wie Gummi.

Die Aufnahme kann einen Bereich zur Aufnahme einer Verstellkraft aufweisen, um eine Stellung der Aufnahme bzw. der Haltemittels insgesamt manuell oder automatisch ändern zu können. Die Aufnahme kann beispielsweise einen Abschnitt aufweisen, der von der Unterseite des Trägers herausragt. Das Kanaldach und/oder die Aufnahme können alternativ oder ergänzend einen Bereich zur Aufnahme einer Verstellkraft aufweisen.

Das Bodenteil kann oberseitig auf dem Träger angeordnet sein. Es ist auch denkbar, dass das Bodenteil und der Träger einteilig ausgebildet sind. Das Kanaldach kann zumindest teilweise am Bodenteil und/oder am Träger befestigt sein.

Die Vorrichtung kann zumindest ein Rückstellmittel umfassen. Zwischen der Unterseite des Trägers und der Oberseite der Aufnahme kann beispielsweise zumindest ein Rückstellmittel angeordnet sein. Das Rückstellmittel ist bevorzugt als Zugfeder ausgebildet. Die Vorrichtung weist vorzugsweise zwei bis vier Rückstellmittel auf. Mittels des Rückstellmittels wird das Haltemittel von einer Fixierstellung für das mindestens eine Insekt in eine Ausgangstellung zurückgeführt. Ferner kann durch die Dimensionierung der Abstand vom Bodenteil zum Kanaldach variiert werden, um damit verschiedene Insektenarten zu berücksichtigen. Denkbar ist auch ein verstellbarer Anschlag, der das Spiel zwischen der Aufnahme und dem Träger begrenzt.

Der zweite Abschnitt kann einen sich auf die Ausgangsöffnung hin verengenden Querschnitt derart aufweisen, so dass im Bereich der Ausgangsöffnung eine mindestens teilweise Immobilisierung in Sinne einer Verlangsamung des Insektes erfolgt. Der sich verengende Querschnitt in diesem Sinn ist ein Unterfall des verengten Querschnitts des zweiten Abschnitts im Vergleich zum ersten Abschnitt. Eine solche Vorrichtung muss z.B. nicht eine Verschiebbarkeit von Bodenteil zu Kanaldach aufweisen.

Bevorzugt ist im Bereich der Ausgangsöffnung des zweiten Abschnitts mindestens eine Öffnung zur Aufbringung der Substanz angeordnet. Durch diese ist eine Substanz z.B. durch einen Applikator an einem in der Vorrichtung immobilisiertes Insekt anordbar. Die Öffnung ist besonders bevorzugt im Kanaldach angeordnet. Die Öffnung kann in der Ausgangsöffnung münden. Besonders bevorzugt ist die mindestens eine Öffnung an einer halbrunden Seite des Kanaldaches ausgebildet. Die Öffnung kann jedoch auch zwischen zwei beabstandeten Bögen eines mehrteiligen Kanaldachs ausgebildet sein.

Die Vorrichtung kann mehrere zweite Abschnitte aufweisen, so dass mehrere Insekten parallel behandelt werden können.

Eine Falle bzw. eine Fangvorrichtung zum Fangen von Insekten kann in der Vorrichtung integriert sein. Die Vorrichtung und die Falle können zumindest teilweise den Aufbau und das Erscheinungsbild eines Bienenstocks bzw. Bienenkastens imitieren. Die Falle kann ein Lockmittel aufweisen. Als Lockmittel kann beispielsweise proteinreiche Insektennahrung wie Fleisch, Fisch und Ähnliches verwendet werden und/oder entsprechende Aromen oder Aromenkonzentrate. Der erste Abschnitt bzw. das Aufbewahrungsmittel der Vorrichtung kann beispielsweise ein Lockmittel umfassen und derart eine Falle bzw. eine Fangvorrichtung zum Fangen von Insekten darstellen.

Die Falle kann vorzugsweise nahe oder direkt vor einem Bienenstock angeordnet werden, um räuberische Insekten, wie Vespa Velutina, anzulocken. Bevorzugt kann die Falle in einem Abstand von etwa 150mm bis etwa 500mm und besonders bevorzugt von etwa 200mm bis etwa 400mm von an einem Bienenstock, insbesondere vor einem Eingang des Bienenstocks, angeordnet werden. Die Falle kann besonders bevorzugt unmittelbar vor einem Eingang des Bienenstocks angeordnet werden. Die Falle kann den Bienenstock beispielsweise zumindest teilweise umschließen. Die Falle kann derart ausgebildet sein, dass Honigbienen diese ungehindert passieren können, andere Insekten aber nicht. Die Falle und/oder die Vorrichtung können beispielsweise zumindest eine Öffnung aufweisen, die groß genug für eine Honigbiene ist, aber zu klein für größere räuberische Insekten, wie Vespa Velutina. Die Öffnung kann beispielsweise zu klein für ein räuberisches Insekt sein, das eine Biene gefangen hat und zum Fressen wegtransportieren möchte. Diese Öffnung kann beispielsweise Teil eines Gitters oder eines Netzes sein.

Alternativ ist die Falle vorzugsweise separat von der Vorrichtung ausgebildet. Die Falle bzw. Fangvorrichtung kann der Vorrichtung, insbesondere dem ersten Abschnitt der Vorrichtung, vorgeschaltet sein. Die Falle kann beispielsweise mit dem ersten Abschnitt der Vorrichtung verbunden sein bzw. diesen ausbilden. Die Falle bzw. Fangvorrichtung kann der Vorrichtung, bzw. dem zweiten Abschnitt der Vorrichtung, nachgeschaltet sein, um Insekten zum Krabbeln durch die Vorrichtung hindurch zu animieren.

Die Falle umfasst bevorzugt einen Fangbehälter. In dem Fangbehälter ist bevorzugt ein Lockmittel angeordnet. Das Lockmittel kann vor Insekten gesichert sein. Beispielsweise kann das Lockmittel durch ein Gitter, Netz bzw. Käfig geschützt sein. Das Netz kann beispielsweise einen Bereich des Fangbehälters mit dem Lockmittel vom restlichen Fangbehälter abtrennen. Das Lockmittel kann durch einen Gitterboden vom restlichen Fangbehälter abgetrennt sein. Der Fangbehälter ist bevorzugt aus einem lichtundurchlässigen Material ausgebildet. Ferner kann dieser eine Perforierung aufweisen. Mittels der Perforierung können Insekten das Lockmittel wittern und werden von der Falle angezogen. Der Fangbehälter kann mindestens eine Eingangsöffnung für Insekten aufweisen. Der Fangbehälter kann eine Eingangsöffnung für kleinere Insekten und eine Eingangsöffnung für größere räuberische Insekten aufweisen.

Die Eingangsöffnung kann an einen sich zum Inneren des Fangbehälters verjüngenden trichterförmigen Eingangsbereich ausgebildet sein. Derart wird ein Herauskrabbeln von gefangenen Insekten erschwert. Der Eingangsbereich kann zumindest teilweise transparent ausgebildet sein. Hinter der Eingangsöffnung können im Fangbehälter ein labyrinthartiger Abschnitt und/oder zumindest eine beabstandete Wandung angeordnet sein, um ein Zurückkrabbeln des Insekts zur Eingangsöffnung zu erschweren, die Sicht des Insekts auf die Eingangsöffnung zu verdecken und/oder einen direkten Lichteinfall zu minimieren. Eine Rampe kann vor der Wandung angeordnet sein, um Insekten ein Überwinden der Wandung zu erleichtern. Der Eingangsöffnung kann alternativ ein Rohrstück im Inneren des Fangbehälters zugeordnet sein, um einen direkten Lichteinfall in den Fangbehälter minimieren. Ferner kann im Bereich der Eingangsöffnung ein Verschlussmittel bzw. Befestigungsmittel angeordnet sein. Das Verschlussmittel kann eine Perforierung aufweisen. Das Verschlussmittel kann beispielsweise als Schiebtür, Deckel bzw. Schraubverschluss oder Stopfen ausgebildet sein. Besonders bevorzugt kann in einem des Fangbehälters eine drehbare gelagerte Klappe angeordnete sein. Diese Klappe ist vorzugsweise derart angeordnet, dass sich diese nur von außen nach innen aufstoßen und nicht von innen nach außen kann. Hierdurch können gefangene Insekten den Fangbehälter nicht durch die Eingangsöffnung wieder verlassen. Die Falle kann eine separate Anschlussöffnung zum Anordnen einer weiteren Falle, von Bestandteilen einer Falle oder eines Behälters für Insekten aufweisen.

Die Falle kann einen Fangbehälter zumindest teilweise aus Netz aufweisen. Die Falle kann beispielsweise als ein trichterförmiges, sich nach oben verjüngendes Netz ausgebildet sein. Das Netz kann sich schräg, beispielsweise in einem Winkel von etwa 30° bis etwa 40°, nach oben erstrecken. Ein unterer Bereich des Netzes kann beispielsweise vor den Öffnungen eines Bienenstocks angeordnet sein. Das Netz kann derart ausgebildet sein, dass Bienen problemlos hindurch gelangen können, während größere räuberische Insekten sich hineinzwängen müssen. Das Netz kann vorzugsweise zu engmaschig für größere, räuberische Insekten sein, so dass diese durch nur eine vorbeschriebene Eingangsöffnung des Fangbehälters in das Netz gelangen können. Drinnen im Netz können die räuberischen Insekten dieses nicht verlassen, insbesondere nicht mit gefangenen Bienen. Die räuberischen Insekten krabbeln instinktiv im Netz nach oben. Das Netz mündet oben vorzugsweise in ein Verbindungsstück. Über das Verbindungsstück können Insekten in eine erfindungsgemäße Vorrichtung, wie beispielsweise vorbeschrieben, gelangen.

Die Falle kann ein Fangnetz für mehrere Insekten aufweisen. Das Fangnetz kann ein Verschlussmittel aufweisen, beispielsweise eine verschiebbare Platte. Das Verschlussmittel kann mit einer Automatisierungsvorrichtung in Wirkverbindung stehen. Im Inneren des Fangbehälters kann das Fangnetz angeordnet werden. Hierfür weist der Fangbehälter beispielsweise eine Auflage auf. Das Fangnetz kann auf einem separaten Gestell im Fangbehälter angeordnet werden. Der Fangbehälter kann zumindest eine Öffnung zum Anordnen eines Fangnetzes im Inneren des Fangbehälters aufweisen. Vorzugweise kann der Fangbehälter eine oberseitige Öffnung aufweisen. Die Öffnung kann verschließbar ausgebildet sein, beispielsweise mittels eines Deckels. Der Deckel kann plattenförmig ausgebildet sein. Alternativ kann der Deckel konisch ausgebildet sein. Der Fangbehälter kann eine separate Öffnung zum Entfernen des bzw. zum Verschieben des Verschlussmittels des Fangnetzes aufweisen. Diese Öffnung kann als länglicher Schlitz ausgebildet sein.

Die Falle kann zumindest ein Verbindungstück aufweisen. Mittels des Verbindungstücks kann die Falle mit einer erfindungsgemäßen Vorrichtung, wie beispielsweise vorbeschrieben, und/oder einer weiteren erfindungsgemäßen Falle verbunden werden. Das Verbindungstück kann beispielsweise einer Eingangsöffnung einer erfindungsgemäßen Vorrichtung, einer weiteren Falle und/oder einer Anschlussöffnung einer weiteren Falle zugeordnet sein. Das Verbindungsstück ist bevorzugt zumindest teilweise, weiter bevorzugt vollständig, abgedunkelt, d.h. lichtundurchlässig, ausgebildet. Das Verbindungsstück kann als flexibler Verbindungsschlauch ausgebildet sein. Das Verbindungsstück kann rohrförmig ausgebildet sein, z.B. zylinderförmig. Das Verbindungsstück kann konifiziert ausgebildet sein. Das Verbindungstück kann Befestigungsmittel umfassen, wie Gewinde, Gummiringe etc. Das Verbindungsstück kann im Bereich des Eingangs des ersten Abschnitts der Vorrichtung befestigbar sein. Die Falle kann also mittels des Verbindungstücks insbesondere mit dem ersten Abschnitt der Vorrichtung verbunden sein. Das Verbindungstück kann vorzugsweise den ersten Abschnitt der Vorrichtung ersetzen. Erreicht ein Insekt von der Falle kommend nun beispielsweise eine erfindungsgemäße Vorrichtung kann die Eingangsöffnung der Vorrichtung verschlossen werden, beispielsweise manuell durch eine Schiebetür oder durch eine Automatisierungsvorrichtung. Das Verbindungsstück der Falle, die Eingangsöffnung und die Durchgangsöffnung können insbesondere verschließbar, insbesondere durch eine Automatisierungsvorrichtung verschließbar ausgebildet sein. Alternativ kann die Vorrichtung vom Verbindungsstück gelöst und das Verbindungstück und die Eingangsöffnung der Vorrichtung dann manuell verschlossen werden, beispielsweise durch Deckel.

Dem Verbindungsstück kann zumindest ein funktionaler Abschnitt vorgeschaltet sein. Dem Verbindungsstück kann beispielsweise ein Abschnitt vorgeschaltet sein, dass die Insekten in Richtung des Verbindungsstücks führt und/oder sortiert. Das Verbindungstück kann sich nach oben und/oder einem schrägen Winkel vom Fangbehälter wegerstrecken, das heißt der Abschnitt kann "kaminartig" ausgebildet sein, um zu nutzen, dass Insekten instinktiv nach oben krabbeln. Zwischen der Falle bzw. dem Fangbehälter und dem funktionalen Abschnitt kann zumindest eine Durchgangsöffnung ausgebildet sein. Der funktionale Abschnitt kann zumindest eine separate Anschlussöffnung, insbesondere zur Anordnung einer weiteren Falle, umfassen. Die Falle kann eine separate Anschlussöffnung aufweisen. Um die Insekten in den Abschnitt mittels Licht zu locken, kann dieser lichtdurchlässige Bereiche, beispielsweise aus Glas, Gitter und/oder Netz, aufweisen. Diese Bereiche können insbesondere gegenüberliegend von der Durchgangsöffnung angeordnet sein und einen direkten Lichteinfall in den Fangbehälter ermöglichen. Alternativ kann im Abschnitt eine Lichtquelle, wie eine LED-Lichtquelle, angeordnet sein. Die Falle und/oder der Abschnitt können ein Gitter umfassen, wodurch kleinere Insekten, wie Bienen, aus der Falle entweichen können, größere Insekten wie Wespen und Hornissen aber nicht. Das Gitter kann quasi als "Boden" bzw. Kletterhilfe dienen. Die restlichen Innenflächen des Abschnitts können glatt, gewölbt und/oder lichtundurchlässig ausgebildet sein. Hierdurch wird sich das Insekt auf dem Boden nach oben bewegen und wird derart geführt und ausgerichtet. Der Abschnitt kann beispielsweise zwei innere Seitenflächen aufweisen, die in eine gewölbten "Deckfläche" übergehen, wobei diese bevorzugt glatt und lichtundurchlässig ausgebildet sind.

Der Abschnitt kann separat oder ergänzend einen Selektionsabschnitt aufweisen. Der Selektionsabschnitt kann Mittel zur Identifizierung von bestimmten Insekten, wie Vespa Velutina, aufweisen. Diese können einen Sensor und/oder eine Kamera zur Erkennung von charakteristischen Farbmustern umfassen. Besonders bevorzugt steht der Selektionsabschnitt in Wirkverbindung mit einer Automatisierungsvorrichtung, umfassend eine Kamera, ein Verschlussmittel und eine Kontrolleinheit mit Bildverarbeitung. Erkennt die Kontrolleinheit, dass es sich um ein bestimmtes Insekt handelt, bleibt das Verschlussmittel verschlossen, so dass das Insekt weiter zum Verbindungsabschnitt krabbeln muss. Andernfalls wird das Verschlussmittel geöffnet und das Insekt kann die Falle verlassen.

Die Falle kann mittels des Verbindungstücks mit einem Behälter für zumindest ein Insekt verbunden sein. Dieser ist bevorzugt entsprechend dem ersten Abschnitt der erfindungsgemäßen Vorrichtung ausgebildet und zwei umfasst entsprechend zwei Öffnungen. Derart kann der Behälter anstelle des ersten Abschnitts in einer Vorrichtung angeordnet bzw. ausgetauscht werden. Eine der Öffnungen kann am Verbindungstück anordbar bzw. befestigbar sein. Die Öffnungen können verschließbar ausgebildet sein, beispielsweise durch jeweils einen Deckel, einen Stopfen, eine Klappe, eine Schiebetür etc. Diese Verschlussmittel können in Wirkverbindung mit einer Automatisierungsvorrichtung stehen.

Der Behälter kann beispielsweise nur eine Öffnung bzw. eine Eingangsöffnung aufweisen. Dieser Behälter kann derart anstelle des ersten Anschnitts in der Vorrichtung anordbar bzw. befestigbar sein, dass die Öffnung der Durchgangsöffnung des zweiten Abschnitts zugeordnet ist. Ein Insekt kann so zunächst über dass Verbindungsstück über die eine Öffnung in den Behälter krabbeln. Erreicht nun das Insekt einen Behälter kann z.B. manuell von der Falle gelöst werden und das jeweilige Verbindungstück der Falle und die Eingangsöffnung des Behälters verschlossen werden. Wird der Behälter nun wie beschrieben in einer Vorrichtung angeordnet, kann das Insekt über die Öffnung dann in den zweiten Abschnitt einer Vorrichtung krabbeln.

Der Behälter kann nach dem manuellen Entfernen von der Falle, derart vor dem ersten Abschnitt einer Vorrichtung angeordnet werden, dass die Öffnung des Behälters der Eingangsöffnung der Vorrichtung zugeordnet ist, so dass ein Insekt auf diesem Weg in die Vorrichtung krabbeln kann.

Der Behälter ist bevorzugt zylinderförmig ausgebildet. Der Behälter kann konifiziert ausgebildet sein. Der Behälter kann zumindest teilweise lichtdurchlässig ausgebildet sein. Der Behälter kann eine im Zusammenhang mit dem ersten Abschnitt der erfindungsgemäßen Vorrichtung vorbeschriebene abnehmbare separate Abdeckung aufweisen.

Das Verbindungstück ist bevorzugt an einem Deckel des Fangbehälters der Falle angeordnet. Das Verbindungstück kann auch an einer Wandung des Fangbehälters angeordnet sein. Das Verbindungstück kann ein Verschlussmittel zum Sperren des Verbindungstücks aufweisen. Das Verschlussmittel kann als Deckel, Stopfen, Klappe oder Schiebetür ausgebildet sein. Das Verschlussmittel kann mit einer Automatisierungsvorrichtung in Wirkverbindung stehen. Die Falle kann insbesondere mehrere Verbindungstücke aufweisen, um mehrere Behälter für Insekten und/oder Vorrichtungen zum Schutz von Honigbienen mit der Falle verbinden zu können. Derart kann mittels der Falle eine Separierung von Insekten erfolgen. Befinden sich mehrere Insekten in der Falle, werden diese instinktiv die Verbindungsstücke passieren und in die angeordneten Behälter und/oder Vorrichtungen krabbeln, da diese vorzugsweise zumindest teilweise lichtdurchlässig sind. Die Insekten können beispielsweise mittels eines Lockmittels, wie einem Aromakonzentrat, zum Krabbeln in die Behälter und/oder Vorrichtungen zu animieren. Das Lockmittel kann beispielsweise Bier, Zucker, Honig, eine Wabe mit Honig oder einer Bienenlarve, eine Biene und/oder entsprechende Aromen umfassen. Das Lockmittel kann den Geruch eines Bienenstocks imitieren und insbesondere Geraniol und/oder andere flüchtige Bestandteile umfassen. Das Lockmittel kann in den Behältern bzw. in den Vorrichtungen oder in mit diesen in Wirkverbindung stehenden Fallen angeordnet sein. Die separierten Insekten können dann wie vorbeschrieben mit der Substanz behandelt werden.

Das Aufbewahrungsmittel bzw. das Haltemittel und/oder die Falle kann eine Automatisierungsvorrichtung aufweisen. Diese weist bevorzugt einen Aktuator, einen Applikator zum Auftrag der Substanz und/oder eine Sensoreinheit auf. Die Sensoreinheit kann Wärme- und/oder Positionssensoren umfassen. Die Sensoreinheit kann optische Sensoren, insbesondere zur Farberkennung, umfassen. Diese Komponenten sind bevorzugt oberhalb des Kanaldaches angeordnet. Hierbei liegt der Aktuator bevorzugt am Kanaldach an. Wird nun von der Sensoreinheit festgestellt, dass sich ein Insekt in dem Fixierkanal befindet, wird der Aktuator und/oder der Applikator aktiviert. Der Aktuator steht bevorzugt in Wirkverbindung mit einem Haltemittel. Bevorzugt ist dabei das Insekt derart im Aufbewahrungsmittel geführt, dass die Oberseite der Brust zum Kanaldach ausgerichtet ist, beispielsweise einer Öffnung im Kanaldach die dem Applikator zugeordnet ist. Der Aktuator aktiviert das Haltemittel. Beispielsweise drückt der Aktuator das Kanaldach nach unten in die Fixierstellung. Anschließend wird durch die Automatisierungsvorrichtung der Applikator durch die Öffnung zum Insekt abgesenkt und die Substanz aufgetragen. Dann wird der Applikator in die Ausgangsstellung zurückgezogen. Auch der Aktuator wird in die Ausgangstellung verfahren, wodurch die Fixierung des Insekts, gelöst und dieses wieder mobilisiert wird. Alternativ kann der Aktuator beispielsweise bewegliche Seitenflächen bzw. Backen eines zangen- bzw. pinzettenartigen Haltemittels, das im zweiten Abschnitt positioniert ist, zusammendrücken, wodurch das Insekt immobilisiert wird. Dann kann ein Auftrag der Substanz durch eine Öffnung im Kanaldach erfolgen oder der Aktuator fährt das Haltemittel mit dem Insekt durch die Ausgangsöffnung des zweiten Abschnitts zumindest teilweise heraus, wo dann ein Auftrag der Substanz mittels des Applikators außerhalb des zweiten Abschnitts erfolgt. Der Aktuator öffnet anschließend das Haltemittel zum Mobilisieren des insektes und verfährt das Haltemittel zurück in den zweiten Abschnitt.

Die Automatisierungsvorrichtung kann ferner in Wirkverbindung mit den Verschlussmitteln stehen, die am Eingang des ersten Abschnitts, am Ausgang des zweiten Abschnitts an einem Verbindungsstück der Falle und/oder am Eingang der Falle angeordnet sind. Entsprechend kann die Automatisierungsvorrichtung Sensoren umfassen, die dem ersten Abschnitt, dem zweiten Abschnitt und/oder der Falle bzw. einem Verbindungsstück der Falle zugeordnet sind.

Die Automatisierungsvorrichtung kann ergänzend oder alternativ zur genannten Sensoreinheit eine Kamera und/oder eine Kontrolleinheit mit einer Bildverarbeitung bzw. Sensordatenauswertung aufweisen. Die Automatisierungsvorrichtung kann ausgebildet sein, um festlegbare Arten von Insekten von anderen zu unterscheiden. Insbesondere können asiatische Wespen von der Automatisierungsvorrichtung erkannt werden. Die Vespa Velutina weist beispielsweiseweise ein charakteristisches Farbmuster am Körper auf. Registriert die Automatisierungsvorrichtung, dass sich eine andere insektenart bzw. ein sonstiges Tier, in der Falle und/oder der Vorrichtung zum Schutz von Honigbienen befindet, kann diese dann verhindern, dass ein Auftrag der Substanz erfolgt, beispielsweise indem die Vorrichtung nicht in eine Fixierstellung verfahren wird, und das ungewollte Insekt oder Tier die Vorrichtung durch die Ausgangsöffnung verlassen kann, ohne dass eine Auftrag der Substanz erfolgt. Auch kann die Automatisierungsvorrichtung die Eingangsöffnung der Vorrichtung bzw. der Falle kontrollieren und nur die festgelegte Insektenart hinein lassen. Die Automatisierungsvorrichtung in Wirkverbindung mit einer Bypassöffnung der Falle stehen. Diese kann geöffnet werden, um ungewollte Insekten zu entlassen. Die Bypassöffnung kann beispielsweise in einem Verbindungstück und/oder im vorbeschriebenen Selektionsabschnitt der Falle ausgebildet sein.

Die Vorrichtung kann in Wirkverbindung mit einer Zählvorrichtung stehen, um die Menge der mit der Substanz behandelten Insekten zu erfassen. Die Zählvorrichtung ist vorzugsweise der vorbeschriebenen Automatisierungsvorrichtung, insbesondere einer Kontrolleinheit, zugeordnet. Die Zählvorrichtung kann insbesondere der vorbeschriebenen Automatisierungsvorrichtung des Selektionsabschnitts zugeordnet sein.

Alle Bestandteile beziehungsweise Abschnitte der Vorrichtung und/oder die Falle können zumindest ein Gitter, Netz, Netz-ähnliche Materialien und/oder eine Kletterhilfe, wie ein rauer Boden, umfassen um Insekten zu leiten und zu positionieren. Dies gilt insbesondere für den ersten und den zweiten Abschnitt der Vorrichtung, den Selektionsabschnitt und den kaminartigen Abschnitt der Falle sowie für das Verbindungsstück.

Bevorzugt wird eine Substanz umfassend als chemisch aktive Verbindung mindestens ein Neonicotinoid, bevorzugt ein Imidacloprid und/oder ein Acetamiprid, zum Schutz von Honigbienen vor räuberischen Insekten verwendet. Die Substanz kann zur Schädlingsbekämpfung verwendet werden.

Erfindungsgemäß wird die vorgenannte Substanz in einem der vorbeschriebenen Verfahren verwendet, d.h. die Substanz wird bevorzugt entsprechend den vorbeschriebenen Verfahren appliziert bzw. dem Insekt verabreicht.

Alternativ und/oder ergänzend kann die Substanz für eine andersartige Applikation bzw. Verabreichung bei räuberischen Insekten verwendet werden. Die Substanz kann oral verabreicht werden. Beispielsweise kann die Substanz in einer Insektennahrung angereicht werden, so dass die Substanz durch die Insekten verspeist wird. Die Substanz kann in einem Lockmittel angereichert werden, so dass sich die Substanz auf die Extremitäten der Insekten verteilt, die auf dem Lockmittel landen bzw. dieses berühren. Beispielsweise kann eine Schale mit Aromakonzentrat mit der Substanz vermischt werden und dann als Falle für Insekten verwendet werden. Alternativ kann die Substanz auf einem anderen Weg in das Insekt eingebracht wird. Beispielsweise kann die Substanz per Injektion verabreicht werden.

Weitere vorteilhafte Ausführungsformen gehen aus den nachfolgenden Zeichnungen hervor. Gleiche Teile und Teile mit gleicher Funktion weisen im Folgenden die gleichen Bezugszeichen auf. Es zeigen:
Fig. 1 eine Draufsicht auf eine erste Ausführungsform einer erfindungsgemäßen Vorrichtung;
Fig. 2 eine Seitenansicht der Ausführungsform in Schnittdarstellung gemäß der in Fig. 1 gezeigten Schnittebene;
Fig. 3 eine Vorderansicht der Vorrichtung gemäß Fig. 1;
Fig. 4 die Vorrichtung gemäß Fig. 3 in einer Fixierstellung;
Fig. 5 die Vorrichtung gemäß Fig. 2 in einer Fixierstellung;
Fig. 6 die Vorrichtung gemäß Fig. 2;
Fig. 7 eine schematische Seitenansicht eines ersten Systems umfassend eine erfindungsgemäße Vorrichtung;
Fig. 8 eine schematische Seitenansicht eines zweiten Systems;
Fig. 9 eine schematische Seitenansicht einer zweiten Ausführungsform einer erfindungsgemäßen Vorrichtung;
Fig. 10 eine Draufsicht auf eine dritte Ausführungsform einer erfindungsgemäßen Vorrichtung;
Fig. 11 eine Seitenansicht der Ausführungsform in Schnittdarstellung gemäß der in Fig. 10 gezeigten Schnittebene;
Fig. 12 eine Vorderansicht der Vorrichtung gemäß Fig. 10;
Fig. 13 die Vorrichtung gemäß Fig. 12 in einer Fixierstellung;
Fig. 14 die Vorrichtung gemäß Fig. 11 in einer Fixierstellung;
Fig. 15 eine Querschnittsansicht einer Falle in Explosionsdarstellung;
Fig. 16 eine Querschnittsansicht der Falle gemäß Fig. 15 im Zusammenbau;
Fig.17 eine schematische Querschnittsansicht eines Systems mit einer zweiten
Ausführungsform der Falle und einer vierten Ausführungsform der erfindungsgemäßen Vorrichtung;
Fig.18 eine Draufsicht auf die Schnittebene A gemäß Fig. 17;
Fig. 19 einen Ausschnitt einer Querschnittsansicht einer dritten Ausführungsform der Falle;
Fig. 20 eine Seitenansicht eines Systems mit einer vierten Ausführungsform der Falle und einer vierten Ausführungsform der erfindungsgemäßen Vorrichtung;
Fig. 21 einen Ausschnitt einer Querschnittsansicht einer fünften Ausführungsform der Falle; und
Fig. 22 eine Vorderansicht der in Fig. 21 gezeigten Schnittebene B.

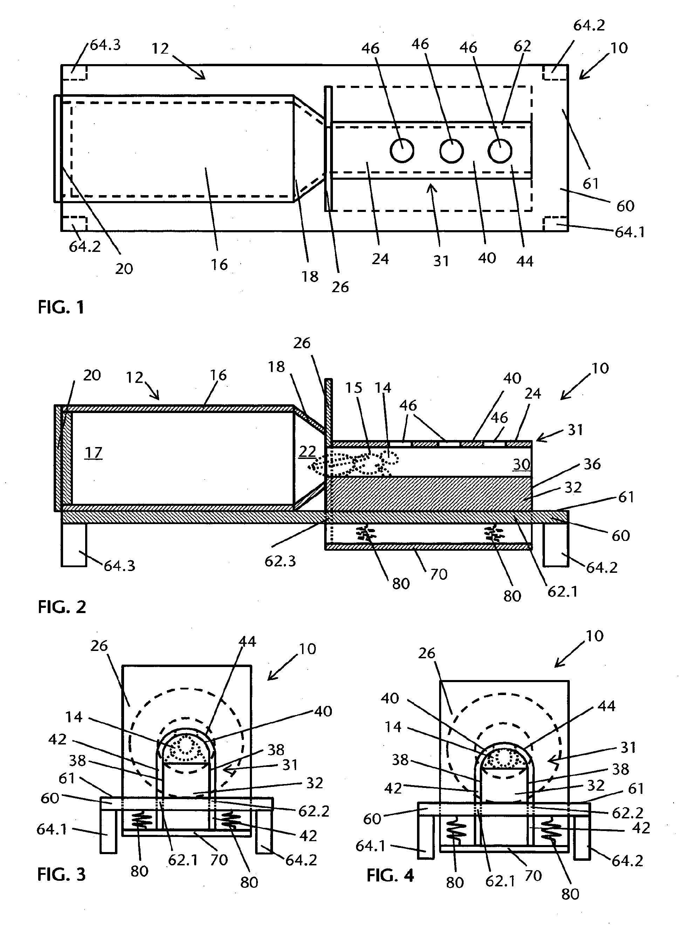

Fig. 1 und Fig. 2 zeigen eine erste Ausführungsform der Vorrichtung 10 zur Durchführung des erfindungsgemäßen Verfahrens ein im Wesentlichen hohles Aufbewahrungsmittel 12 für Insekten 14. Dieses weist einen ersten rohrförmigen Abschnitt 16 mit einer Eingangsöffnung 17 für Insekten 14 auf. Die Eingangsöffnung 17 ist mittels eines Deckels 20 verschließbar. Das Aufbewahrungsmittel 12 und der Deckel 20 sind aus einem lichtundurchlässigen Kunststoff ausgebildet.

Das Aufbewahrungsmittel 12 weist ferner einen sich an den rohrförmigen ersten Abschnitt 16 anschließenden trichterförmigen Abschnitt 18 auf. Der trichterförmige Abschnitt 18 verjüngt sich von dem rohrförmigen ersten Abschnitt 16 weg und mündet in einer Durchgangsöffnung 22 zu einem zweiten Abschnitt 24 des Aufbewahrungsmittels 12. Der zweite Abschnitt 24 weist ein plattenförmiges Adapterteil 26 auf, das rechtwinklig zur Durchgangsöffnung 22 des ersten Abschnitts 16 ausgerichtet ist und an dieser anliegt. Der zweite Abschnitt 24 weist im Bereich des Adapterteils 26 eine Durchgangsöffnung 28 auf, die der Durchgangsöffnung 22 des ersten Abschnitts 16 zugewandt ist. Eine Ausgangsöffnung 30 für Insekten 14 ist endseitig am zweiten Abschnitt 24 ausgebildet. Die Eingangsöffnung 17, die Durchgangsöffnung 22 und/oder die Ausgangsöffnung 30 können Klappen aufweisen.

Der zweite Abschnitt 24 weist einen Durchgang 31 bzw. einen Fixierkanal auf. Der zweite Abschnitt weist ein quaderförmiges Bodenteil 32, welches alternativ auch weggelassen werden könnte, mit einer oberseitigen ebenen Bodenfläche 34, zwei kurzen Seitenflächen 36 sowie zwei länglichen Seitenflächen 38 auf. Die länglichen Seitenflächen 38 und die Bodenfläche 34 des Bodenteils 32 sind von einem Kanaldach 40 umschlossen. Das Kanaldach 40 ist als umgedrehtes U-Profil ausgebildet. Dieses umfasst zwei parallele gerade Seiten 42 und eine diese verbindende halbrunde Seite 44. Die geraden Seiten 42 liegen an den länglichen Seitenflächen 38 des Bodenteils 32 an. Die halbrunde Seite 44 ist von der Bodenfläche 34 beabstandet. An dieser Seite 44 des Kanaldaches 40 sind drei Öffnungen 46 für eine Applikation bzw. Auftrag einer insektiziden Substanz 48 mittels einer Spritze 50 ausgebildet. Das Adapterteil 26, das Kanaldach 40 und das Bodenteil 32 sind aus einem lichtdurchlässigen Kunststoff ausgebildet.

Das Aufbewahrungsmittel 12 ist zumindest teilweise auf einem plattenförmigen rechteckigen Träger 60 bzw. auf dessen Oberseite 61 angeordnet, wobei das Kanaldach 40 und das Adapterteil 26 senkrecht zu dem Träger 60 verschiebbar auf diesem angeordnet sind. Hierfür weist der Träger 60 zwei Führungskanäle 62.1 und 62.2 auf, die korrespondierend zu den parallelen geraden Seiten 42 ausgebildet sind und einen Führungskanal 62.3 für das Adapterteil 26. Der Träger 60 weist vier randseitig angeordnete Stumpfe 64.1, 64.2, 64.3 und 64.4 auf, die unterseitig am Träger 60 angeordnet sind, mittels welchen eine Unterseite 66 des Trägers 60 von einem Untergrund beabstandbar ist. Die durch die Führungskanäle 62 zur Unterseite 66 des Trägers 60 durchgeführten Enden des Adapterteils 26 und des Kanaldachs 40 sind an einer plattenförmigen Aufnahme 70 befestigt. Zwischen der Unterseite 66 des Trägers 60 und der Aufnahme 70 sind vier Zugfedern 80 als Rückstellmittel angeordnet. Diese sind jeweils an der Unterseite 66 des Trägers 60 und an einer dieser zugewandten Seite 72 der Aufnahme 70 angeordnet.

Fig. 2 und 3 zeigen die Vorrichtung 10 in einer Ausgangsstellung. Ein in dem Aufbewahrungsmittel 12 angeordnetes Insekt 14 wird sich instinktiv zum lichtdurchlässigen zweiten Abschnitt 24 der Vorrichtung 10 bewegen.

Die Breite und Höhe des Durchgangs 31 bzw. des Fixierkanals ist insbesondere für Wespen, z.B. asiatischen Wesen, oder Hornissen ausgelegt und verhindert ein Drehen oder Aufspannen der Flügel von Wespen oder Hornissen. Das Insekt 14 wird zur Ausgangsöffnung 30 krabbeln. Hierbei kann das Kanaldach 40 bereits teilweise abgesenkt werden, um die Fortbewegungsgeschwindigkeit des Insektes 14 zu reduzieren, so dass dieses langsamer zur Ausgangsöffnung 30 kriecht. Um das Kanaldach 40 abzusenken, wird eine Kraft auf das Kanaldach 40 zum Träger 60 hin ausgeübt. Dies kann manuell erfolgen, beispielsweise durch Daumen und Zeigefinger einer Hand, die oberseitig auf das Kanaldach 40 gedrückt werden, oder durch Betätigen der Aufnahme 70.

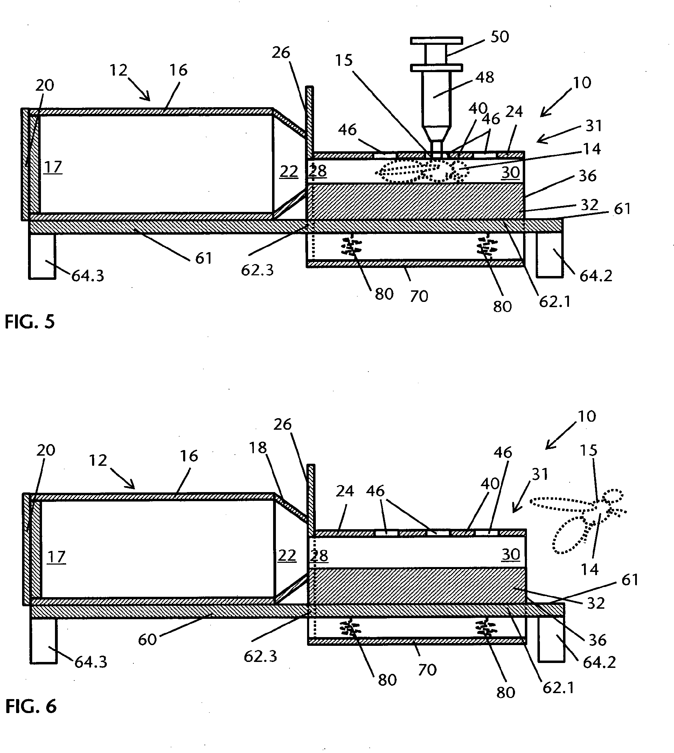

Erreicht das Insekt nun eine Öffnung 46 im Kanaldach 40, wobei eine geeignete Körperstelle 15, insbesondere ein oberseitiger Brustbereich des Insekts 14, unmittelbar hinter dem Kopf desselben, zur Öffnung 46 ausgerichtet ist, wird das Kanaldach 40 abgesenkt, bis das Insekt 14 immobilisiert ist. Die Vorrichtung 10 ist dann, wie in Fig. 4 und Fig. 5 gezeigt, in einer Fixierstellung. Eine Spritze 50 mit einer insektiziden Substanz 48 kann nun durch die Öffnung 46 im Kanaldach 40 zum Insekt 14 für den Auftrag der Substanz 48 geführt werden.

Nach erfolgreichem Auftrag der Substanz 48 wird der Benutzer zunächst die Spritze 50 von der Öffnung 46 im Kanaldach 40 entfernen und dann das Kanaldach 40 oder die Aufnahme 70 loslassen. Durch die Zugfedern 80 kehrt das Kanaldach 40 in die Ausgangsstellung zurück. Das Insekt 14 kann dann ungehindert weiter zur Ausgangsöffnung 30 krabbeln und die Vorrichtung wie in Fig. 6 gezeigt verlassen. In der Ausgangsstellung stößt die Oberseite der Brust des Insektes 14 nicht an die halbrunde Seite 44 des Kanaldachs 40 an. Hierdurch wird sichergestellt, dass die Substanz 48 nicht auf weiteren Körperteilen des Insekts 14 verteilt wird, die durch die Extremitäten des Insekts 14 erreichbar wären. Auch dadurch wird verhindert, dass das Insekt 14 die Substanz 48 direkt aufnehmen kann. Ferner wird verhindert, dass ein nachfolgendes Insekt 14 Substanz 48 aufnimmt, die über die eine Innenfläche der halbrunden Seite 44 durch ein vorangegangenes Insekt 14 verteilt wurde. Kehrt das entlassene Insekt 14 nun zu seiner Kolonie bzw. Nest zurück, kommt dieses mit seinen Artgenossen in Berührung und verteilt derart die insektizide Substanz 48 im Nest. Die verteilte Substanz 48 kann dann durch die Artgenossen aufgenommen werden.

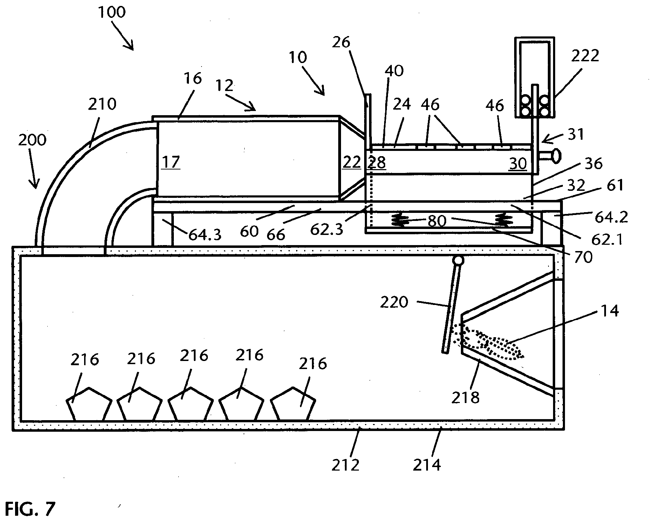

Das in Fig. 7 gezeigte System 100 umfasst eine Vorrichtung 10 wie vorbeschrieben. Diese steht in Wirkverbindung mit einer Falle 200 für Insekten 14. Hierfür ist anstelle des Deckels 20 eine flexible Schlauchleitung 210 am Aufbewahrungsmittel 12 angeordnet. Diese führt in den Fangbehälter 212 der Falle 200. Der Fangbehälter 212 ist aus einem lichtundurchlässigen Material ausgebildet und weist eine Perforierung 214 auf. Mittels der Perforierung 214 können Insekten 14 die in der Falle 200 angeordneten Lockmittel 216, wie Fleischstücke, wittern. Die Lockmittel können in einen durch ein Netz abgetrennten Bereich des Fangbehälters 212 angeordnet sein. Ein angelocktes Insekt 14 wird den trichterförmigen, transparenten Eingangsbereich 218 der Fangvorrichtung 200 passieren und wie in Fig. 7 gezeigt eine perforierte Klappe 220 aufstoßen, um derart in den Fangbehälter 212 gelangen zu können. Die Klappe 220 lässt sich nur von außen nach innen aufstoßen und nicht von innen nach außen. Hierdurch werden gefangene Insekten 14 die Vorrichtung 10 passieren, um zur Ausgangsöffnung 30 der Vorrichtung 10 gelangen zu können. Hierbei können diese wie vorgeschrieben manuell fixiert werden, um die Substanz 48 zielgerichtet aufzutragen zu können. Die Ausgangsöffnung 30 ist mittels einer Schiebetür 222 manuell verschließbar, um zu verhindern, dass Insekten 14 diesen als Eingang benutzen.

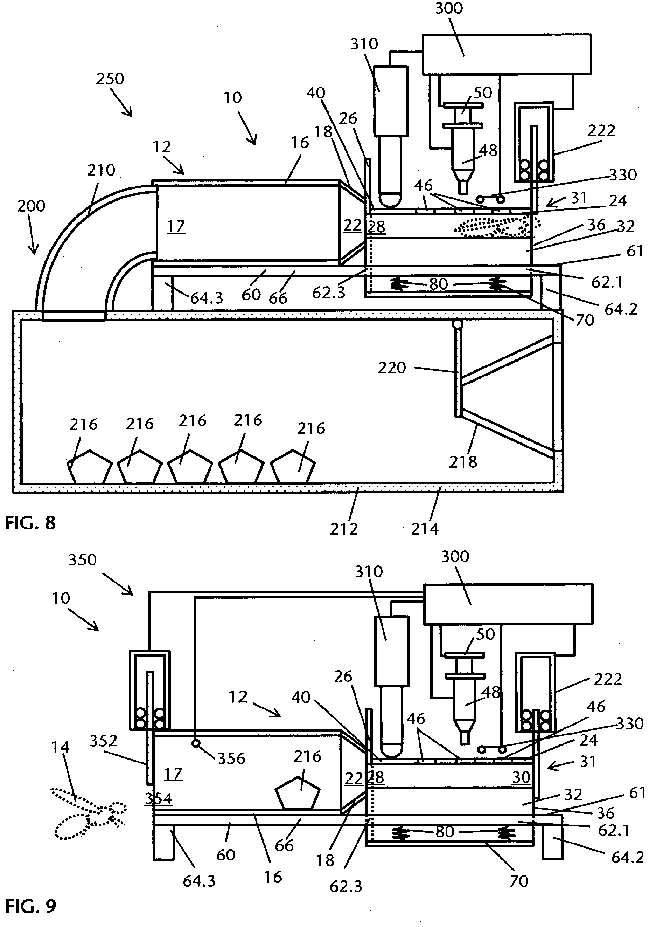

Zusätzlich zu den in Fig. 7 dargestellte Komponenten umfasst das in Fig. 8 gezeigte System 250 eine Automatisierungsvorrichtung 300. Diese weist einen Aktuator 310, eine Spritze 50 mit der insektiziden Substanz 48 sowie eine Sensoreinheit 330, beispielsweise mit einem Wärme und/oder Bewegungssensor ausgestattet, auf. Diese Komponenten sind oberhalb des Kanaldaches 40 angeordnet, wobei der Aktuator 310, auch mehrgliedrig ausgebildet sein kann, am Kanaldach 40 anliegt. Wird nun von der Sensoreinheit 330 erfasst, dass sich ein Insekt 14 im Haltemittel 30 befindet und eine geeignete Körperstelle 15, wie die Oberseite der Brust des Insekts 14, zu einer der Öffnung 46 im Kanaldach 40 ausgerichtet ist, die der Spritze 50 zugeordnet ist, drückt der Aktuator 310, der auch im Bereich der Ausgangsöffnung 30 angeordnet sein kann und bevorzugt mit zwei Gliedern an den beiden Endbereichen des Kanaldachs 40 wirkt, das Kanaldach 40 nach unten in die Fixierstellung. Anschließend wird durch die Automatisierungsvorrichtung 300 die Spritze durch die Öffnung 46 zum Insekt 14 abgesenkt und die insektizide Substanz 48 auf die geeignete Körperstelle 15 aufgetragen. Danach wird die Spritze 50 in die Ausgangsstellung zurückgezogen. Auch der Aktuator 310 wird in die Ausgangstellung verfahren, wodurch die Immobilisierung des Insekts 14 gelöst wird. Ferner wird die Schiebtür 222 durch die Automatisierungsvorrichtung 300 geöffnet. Das Insekt 14 kann wie in Fig. 8 gezeigt dann hinauskrabbeln. Sobald die Sensoreinheit 330, beispielsweise mit einem Wärme und/oder Bewegungssensor, registriert, dass das Insekt 14 den Durchgang 31 verlassen hat, wird die Schiebetür 222 durch die Automatisierungsvorrichtung 300 erneut geschlossen.

Das in Fig. 9 gezeigte kompakte System 350 unterscheidet sich im Wesentlichen von dem in Fig. 8 gezeigten darin, dass dieses keine Falle 200 mit Fangbehälter 210 und Schlauchleitung 212 aufweist. Hingegen fungiert der erste Abschnitt 16 der Vorrichtung 10 selbst als eine Fangvorrichtung bzw. Falle. Die Eingangsöffnung 18 ist mittels einer Schiebtür 352 verschließbarbar, die durch die Automatisierungsvorrichtung 300 gesteuert wird. In der Ausgangsstellung gibt die Schiebetür 352 einen Spalt 354 frei, so das Insekten 14 ein im ersten Abschnitt 16 angeordnetes Lockmittel 216 wittern können. Gelangt nun ein Insekt 14 in den ersten Abschnitt 16, wird dies von einer dort angeordnete Sensoreinheit 356 registriert, woraufhin die Schiebtür 352 verschlossen wird. Krabbelt das Insekt 14 nun in das Haltemittel 31, bewirkt die Automatisierungsvorrichtung 300 den Auftrag der insektiziden Substanz 48 wie vorbeschrieben. Danach wird das Insekt wie zu Fig. 8 ausgeführt aus dem Haltemittel 31 entlassen.

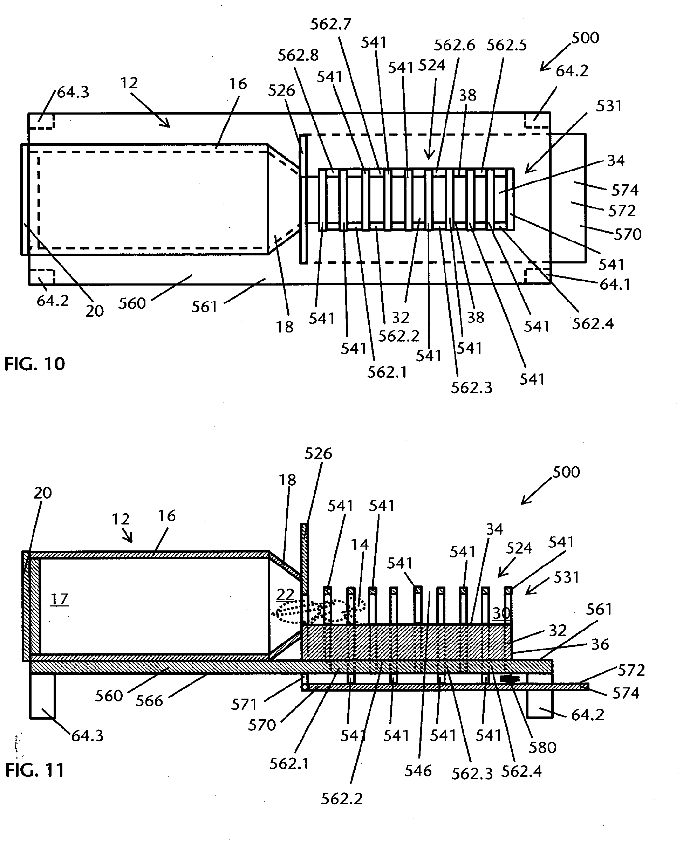

Die in Fig. 10 gezeigte Vorrichtung 500 unterscheidet sich von der in Fig. 1 bis Fig. 6 gezeigten Vorrichtung 10 darin, dass das Adapterteil 526 des zweiten Abschnitts 524 bzw. des Durchgangs 531 nicht verschiebbar, sondern fest auf dem Träger 560 angeordnet ist. Ferner ist das Kanaldach mehrteilig aus neun axial beabstandeten Bögen 541 ausgestaltet, die im Wesentlichen wie kurze Kanaldächer 40 der Vorrichtung 10 gemäß der ersten Ausführungsform ausgebildet sind. Ein Spalt zwischen den Bögen kann als Öffnung 546 zum Auftragen der Substanz verwendet werden. Die Bögen 541 weisen jeweils zwei beabstandete gerade Bogenabschnitte 542 und einen verbindenden halbkreisförmigen Bogenabschnitt 544 auf. An den geraden Bogenabschnitten 542 ist der von dem Adapterteil 526 gesehene erste, dritte, fünfte, siebte und neunte Bogen 541 auf der Oberseite 561 des Trägers 560 befestigt. Der zweite, vierte, sechste und achte Bogen 541 sind hingegen auf einer drehbar gelagerten Aufnahme 570 angeordnet, die wiederum an der Unterseite 566 des Trägers 560 angeordnet ist. Die geraden Bogenabschnitte 542 dieser Bögen 541 sind entsprechend länger ausgebildet, so dass die halbrunden bzw. halbkreisförmigen Bogenabschnitte 544 in der Ausgangsstellung zueinander fluchten. Zwischen den auf dem Träger 560 befestigten Bögen 541 sind Führungskanäle 562 ausgebildet, in denen die auf der Aufnahme 570 befestigten Bögen 541 angeordnet sind. Die Aufnahme 570 ist mittels eines Gelenkstücks 571 von Unterseite 566 des Trägers 560 beabstandet. Zwei Zugfedern 580 sind in dem Zwischenraum zwischen dem Träger 560 und der Aufnahme 570 angeordnet. Die Zugfedern 580 sind jeweils an der Unterseite 566 des Trägers 560 und an der Oberseite 572 der Aufnahme 570 befestigt. Die Aufnahme 570 ragt zur Vorderseite der Vorrichtung 500 hinaus und stellt derart einen Aufnahmebereich 574 für eine Verstellkraft zur Verfügung. Ansonsten entsprechen die Bauteile dieser Vorrichtung 500 der Bauteile der Vorrichtung 10.

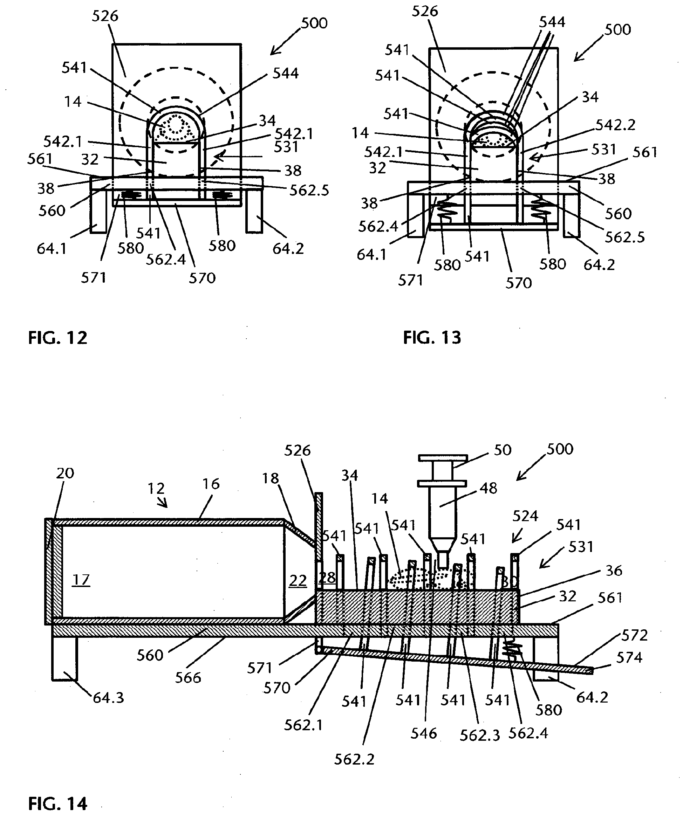

Wie in den Fig. 11 und 12 ersichtlich sind die Raumverhältnisse im Haltemittel 531 im Wesentlichen gleich wie bei der Vorrichtung 10 gemäß der ersten Ausführungsform, siehe auch Fig. 2 und Fig. 3. Ein Insekt 14 kann in der Ausgangstellung ungehindert in Richtung der Ausgangsöffnung 530 krabbeln.

Die in Fig. 13 und Fig. 14 gezeigte Fixierstellung wird dadurch erreicht, dass der Aufnahmebereich 574 nach unten gedrückt wird. Hierdurch kippen und senken sich die auf Aufnahme 570 befestigten Bögen 541 und können ein Insekt 14 in der Fixierstellung immobilisieren.

Wie in Fig. 14 gezeigt kann der Auftrag der insektiziden Substanz 48 beispielsweise manuell mit einer Spritze 50 auf eine geeignete Körperstelle 15, wie der Oberseite der Brust, erfolgen. Diese Vorrichtung 500 kann wie Vorrichtung 10 in Zusammenbau mit der vorbeschriebenen Falle 200 und/oder Automatisierungsvorrichtung 300 verwendet werden.

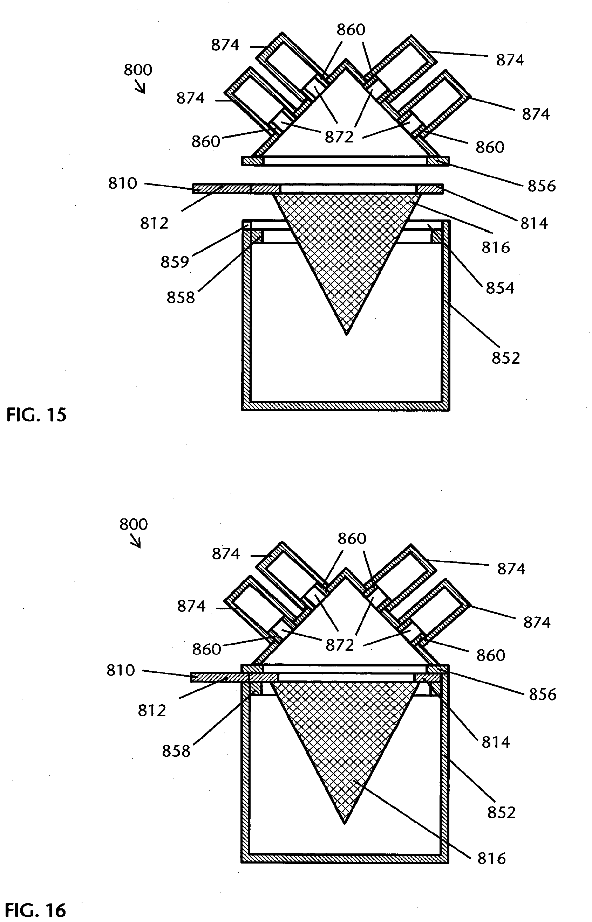

Fig. 15 zeigt eine Falle 800 zum Fangen von mehreren Insekten 14. Die Falle 800 umfasst ein konventionelles Fangnetz 810 mit einen Griff 812, einen Rahmen 814 und ein Netz 816 für Insekten 14. Das Netz 816 ist im Rahmen 814 eingefasst und der Griff 812 ist am Rahmen befestigt.

Die Falle 800 umfasst ferner einen zylinderförmigen Fangbehälter 852 aus einem lichtundurchlässigen Kunststoff mit einer oberseitigen Öffnung 854 und einem Deckel 856 zum Verschluss der Öffnung 854. Im Bereich der Öffnung 854 ist ein ringförmiger Auflagebereich 858 für den Rahmen 814 und einen seitliche Öffnung 859 für den Griff 812 des Fangnetzes 810 ausgebildet.

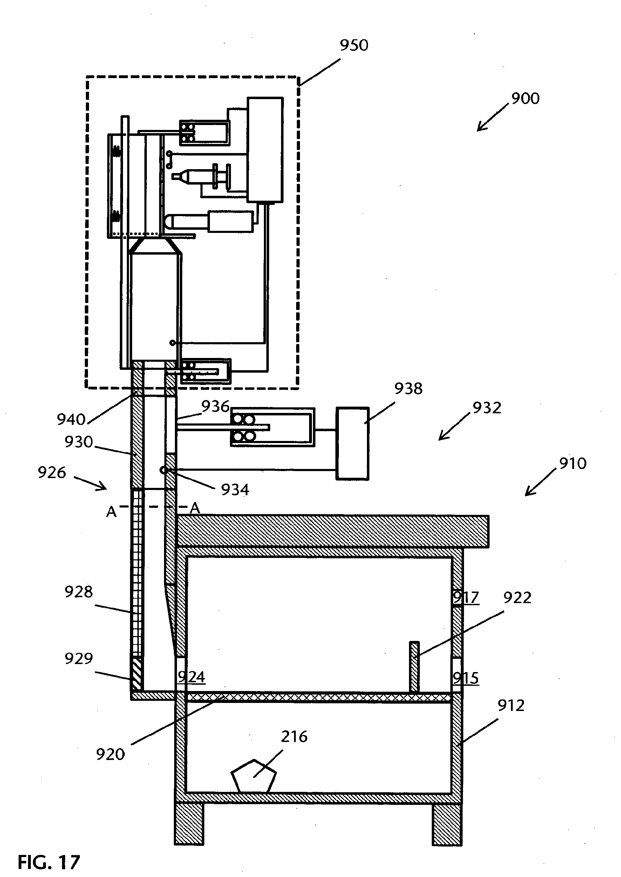

Der Deckel 856 weist eine konische Form auf und ist aus einem lichtundurchlässigen Kunststoff ausgebildet. Der Deckel 856 weist ferner vier zylinderförmige Verbindungsstücke 860 auf. Diese sind ebenso aus einem lichtundurchlässigen Kunststoff ausgebildet. An diesen ist jeweils die Eingangsöffnung 872 eines zylinderförmigen Behälters 874 angeordnet. Die Behälter 874 sind aus einem lichtdurchlässigen Kunststoff ausgebildet. Zumindest eines der Verbindungstücke 860 kann insbesondere der nicht dargestellten Anschlussöffnung der Falle 910 gemäß Fig. 17 zugeordnet sein.

Werden nun mehrere Insekten 14 mit dem Fangnetz 810 gefangen, wird dieses im Fangbehälter 852 wie in Fig. 16 gezeigt angeordnet. Die Öffnung 854 des Fangbehälters 852 wird durch den Deckel 856 verschlossen. Die Insekten 14 werden vom Licht angezogen und streben zu den Behältern 874. Sobald ein einzelnes Insekt 14 in einem Behälter 874 ist, kann dieser vom Deckel 856 entfernt bzw. ausgetauscht werden. Derart können mittels der Falle 800 Insekten 14 separiert werden. Die separierten Insekten 14 können dann einer Vorrichtung 10 bzw. 500 zugeführt werden. Ergänzend oder alternativ kann der Deckel 856 mit einer oder mehreren Vorrichtungen 10 bzw. 500 anstelle eines oder aller Behälter 874 verbunden sein.

Fig. 17 zeigt ein System 900 umfassend eine Falle 910 und eine Vorrichtung 950. Die Falle 910 ist äußerlich einem Bienenstock nachgebildet und weist einen Fangbehälter 912 auf. Der Fangbehälter 912 ist aus einem lichtundurchlässigen Material ausgebildet und weist eine Eingangsöffnung 915 für größere Insekten, wie Wespen und Hornissen, und eine optionale Eingangsöffnung 917 für kleinere Insekten, wie Bienen, auf. Der Eingangsöffnung 917 ist ein nicht dargestelltes Rohrstück im Innen des Fangbehälters 912 zugeordnet, um einen direkten Lichteinfall in den Fangbehälter 912 zu minimieren. In der Falle 910 ist ein Lockmittel 216 angeordnet. Das Lockmittel 216 ist im Fangbehälter 912 unterhalb eines engmaschigen Gitterbodens 920 angeordnet, so dass Aroma zum Anlocken von Insekten entweichen kann, aber angelockte Insekten, die durch die Eingangsöffnungen 915, 917 in den Fangbehälter 912 hereingekrabbelt sind, das Lockmittel 916 nicht erreichen können. Beim Hineinkriechen in den Fangbehälter 912 passieren größere Insekten eine im Fangbehälter 912 angeordnete Wandung 922 aus einem lichtundurchlässigen Material. Vor der Wandung 922 ist eine nicht dargestellte Rampe für Insekten angeordnet. Die Wandung 922 verdeckt die Sicht der hineingekrabbelten Insekten auf die Eingangsöffnung 915 und verhindert einen direkten Lichteinfall. Die hineingekrabbelten Insekten werden stattdessen instinktiv von einer Durchgangsöffnung 924 zu einem kaminartigen Abschnitt 926 der Falle 910 angezogen. Denn der kaminartige Abschnitt 926 umfasst gegenüberliegend von der Durchgangsöffnung 924 ein grobmaschiges Gitter 928 und eine optionale Glasscheibe 929. Unterhalb der Glasscheibe 929 ist am kaminartigen Abschnitt eine nicht dargestellte Anschlussöffnung für eine weitere Falle ausgebildet. Das Gitter 928 und die Glasscheibe 929 ermöglichen einen direkten Lichteinfall in den Fangbehälter 912. Die davon angezogenen Insekten werden instinktiv im kaminartigen Abschnitt 926 nach oben krabbeln. Durch das Gitter 928 können kleinere Insekten, wie Bienen, aus der Falle 912 entweichen, größere Insekten wie Wespen und Hornissen aber nicht. Größere Insekten werden weiter nach oben in einen Selektionsabschnitt 930 krabbeln. Der Selektionsabschnitt 930 steht in Wirkverbindung mit einer Automatisierungsvorrichtung 932 umfassend eine Kamera 934, ein Verschlussmittel 936 und eine Kontrolleinheit 938 mit Bildverarbeitung. Das Insekt wird mit der Kamera 934 aufgenommen. Erkennt die Kontrolleinheit 938, dass es sich um ein Insekt handelt, das nicht mit der Substanz behandelt werden soll, wird das Verschlussmittel 936 geöffnet und das Insekt kann aus der Falle 910 krabbeln. Andernfalls bleibt das Verschlussmittel 936 geschlossen und das Insekt krabbelt weiter nach oben und über ein Verbindungsstück 940 in eine Vorrichtung 950, die der in Fig. 9 gezeigten Vorrichtung 350 entspricht. Die Vorrichtung 950 unterscheidet sich von der Vorrichtung 350 im Wesentlichen durch eine vertikale Anordnung der gesamten Vorrichtung 950 und dass kein zusätzliches Lockmittel 216 verwendet wird. Das Insekt wird mittels der Vorrichtung 950 wie entsprechend zu Fig. 9 beschrieben mit Substanz behandelt und aus der Vorrichtung 950 dann entlassen.

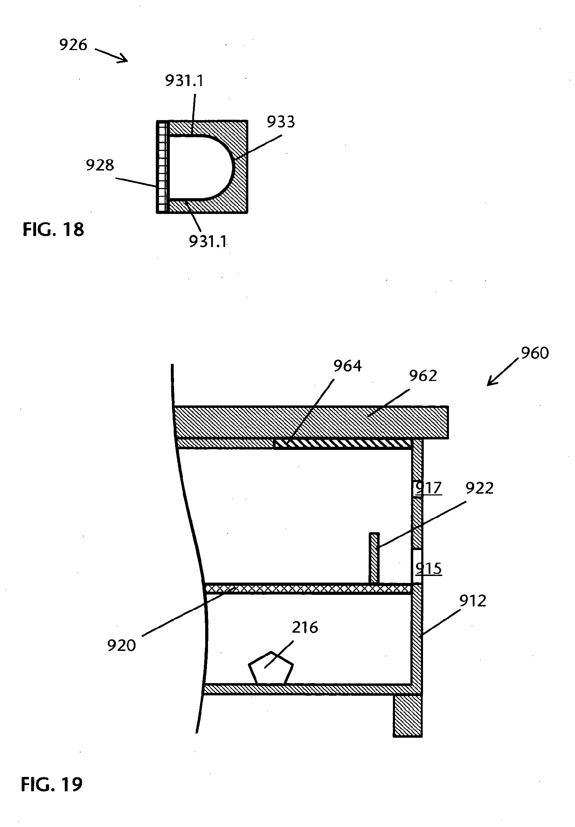

Fig. 18 zeigt, dass im kaminartigen Abschnitt 926 das Gitter 928 quasi als Boden fungiert, auf dem die Insekten krabbeln können. Der kaminartige Abschnitt 926 weist zwei innere Seitenflächen 931 auf, die in eine gewölbte Deckfläche 933 übergehen. Diese sind glatt und lichtundurchlässig ausgebildet. Hierdurch werden die Insekten geführt und ausgerichtet.

Fig. 19 zeigt eine Falle 960, die sich von der in Fig. 17 gezeigten Falle 910 darin unterscheidet, dass diese einen abnehmbaren Deckel 962 aufweist. Mittels des Deckels 962 ist ein lichtdurchlässiger Abschnitt 964 aus Glass des Fangbehälters 912 abdeckbar. Wird nun ein abgedunkelter Behälter mit Insekten vor die Öffnung 915 gehalten und der Abschnitt 964 aufgedeckt, werden die Insekten vom Licht angezogen in den Fangbehälter 912 krabbeln.

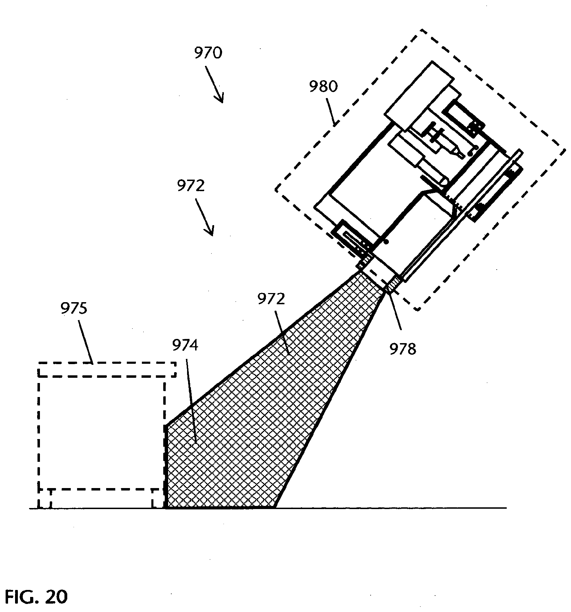

Fig. 20 zeigt ein System 970 umfassend eine Falle 972 und eine Vorrichtung 980. Die Falle umfasst ein trichterförmiges, sich nach oben verjüngendes Netz 972. In einem unteren, breiten Bereich 974 ist das Netz 972 vor den Öffnungen eines Bienenstocks 975 angeordnet. Bienen können problemlos durch das Netz 972 hindurch gelangen, während größere räuberische Insekten sich hineinzwängen müssen bzw. nur durch eine optionale, nicht dargestellte, trichterförmige Eingangsöffnung in das Netz 972 gelangen können, um Bienen zu fangen. Drinnen im Netz 972 können die räuberischen Insekten dieses insbesondere nicht mit gefangen Bienen verlassen. Die räuberischen Insekten krabbeln instinktiv nach oben. Das Netz 972 mündet dort in ein Verbindungsstück 978. Über das Verbindungsstück 978 gelangen die Insekten in eine Vorrichtung 980. Die Vorrichtung 980 unterscheidet sich von der in Fig. 9 gezeigten Vorrichtung 350 darin, dass diese wie das Netz 972 in einem schrägen Winkel von ca. 35° angeordnet ist und dass kein zusätzliches Lockmittel 216 verwendet wird.

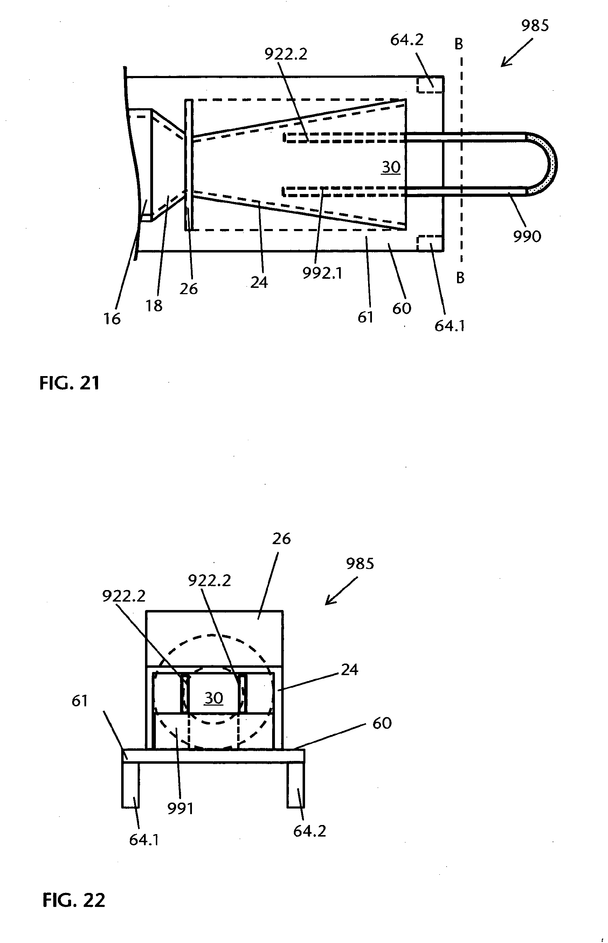

Die in Fig. 21 und Fig. 22 gezeigte Vorrichtung 985 unterscheidet sich von der in Fig. 1 gezeigten in der Ausbildung des zweiten Abschnitts 30. Der erste Abschnitt 16 ist wie in Fig. 1 gezeigt ausgebildet. Der zweite Abschnitt 24 und mit einem Boden 991 verbreitern sich zur Ausgangsöffnung 30 hin und sind in der Draufsicht trapezförmig beziehungsweise trichterförmig ausgebildet. In dem zweiten Abschnitt 24 ist ein zangenartiges Haltemittel 990 mit zwei zueinander beweglichen Seitenflächen 992 angeordnet. Ein Insekt im zweiten Abschnitt 24 würde sich wegen der Verbreiterung des Abschnitts 24 instinktiv auf geradem Weg auf die Ausgangsöffnung 30 zu bewegen. Das Insekt gelangt auf dem Weg dorthin zwischen die Seitenflächen 992 des Haltemittels. Diese können dann durch Immobilisierung des Insekts zueinander bewegt werden. Das Insekt kann mit dem Haltemittel 990 aus dem zweiten Abschnitt 24 heraus genommen werden, um die Substanz aufzutragen und um das Insekt anschließend zu mobilisieren.

## Patentansprüche

1. Verfahren zum Schutz von Honigbienen vor räuberischen Insekten (14), wobei mindestens eines der Insekten (14) gefangen und zumindest teilweise immobilisiert wird, auf die Brust des Insekts (14) mindestens eine auf dem Insekt (14) haftende insektizide Substanz (48) aufgebracht wird, damit das Insekt (14) die Substanz (48) nicht vollständig entfernen kann, und anschließend das Insekt (14) mobilisiert wird.

2. Verfahren gemäß Anspruch 1, **dadurch gekennzeichnet, dass** die Substanz (48) mindestens eine chemisch aktive Verbindung umfasst, ausgewählt aus einer Gruppe umfassend Neonicotinoide.

3. Verfahren gemäß Anspruch 2, **dadurch gekennzeichnet, dass** das mindestens eine Neonicotinoid ausgewählt ist aus einer Gruppe umfassend Imidacloprid und Acetamiprid.

4. Verfahren gemäß einem oder mehreren der Ansprüche 2 oder 3, **dadurch gekennzeichnet, dass** die chemisch aktive Verbindung in einer Menge in einem Bereich von etwa 0,001 mg bis etwa 1 mg auf der Körperstelle (15) aufgebracht wird.

5. Verfahren gemäß einem der vorhergehenden Ansprüche, **dadurch gekennzeichnet, dass** die Substanz in einer Menge in einem Bereich von etwa 0,2 mg bis etwa 20 mg auf dem Insekt (14) aufgebracht wird.

6. Verfahren gemäß einem der vorhergehenden Ansprüche, **dadurch gekennzeichnet, dass** die Substanz (48) mittels einer Spritze (50) auf dem Insekt (14) aufgebracht wird.

7. Verfahren gemäß einem der vorhergehenden Ansprüche, **dadurch gekennzeichnet, dass** die zumindest teilweise Immobilisierung erfolgt durch Halten des Insektes (14) mit einem Haltemittel mit zueinander beweglichen Teilen oder durch Führung des Insektes (14) von einem ersten röhrenförmigen Abschnitt (16) eines Aufbewahrungsmittels (12) für das Insekt (14) in einen Durchgang (31, 531) eines zweiten röhrenförmigen Abschnitts (24, 524) des Aufbewahrungsmittels (12), der mit einem verringertem Querschnitt im Vergleich zum ersten röhrenförmigen Abschnitt (16) des Aufbewahrungsmittels (12) ausgebildet ist.

8. Vorrichtung (10, 500) zur Durchführung des Verfahrens gemäß einem der Ansprüche 1 bis 7, **dadurch gekennzeichnet, dass** diese ein Aufbewahrungsmittel (12) mit einem röhrenförmigen ersten Abschnitt (16) und einen im Querschnitt im Vergleich zum ersten Abschnitt (12) verengten, röhrenförmigen zweiten Abschnitt (24, 524) mit einer Ausgangsöffnung (30) aufweist, wobei vor dem ersten Abschnitt (16) eine Falle (200) für das Insekt (14) angeordnet ist.

9. Vorrichtung gemäß Anspruch 8, **dadurch gekennzeichnet, dass** der zweite Abschnitt (24) ein zur zumindest teilweisen Immobilisierung des Insektes (14) bewegbares Immobilisierungsmittel aufweist, welches mindestens eine Öffnung (46, 546) zur Aufbringung der Substanz (48) aufweist.

10. Vorrichtung gemäß einem oder mehreren der Ansprüche 8 bis 9, **dadurch gekennzeichnet, dass** der zweite Abschnitt (24) einen sich auf die Ausgangsöffnung (30) hin verengenden Querschnitt derart aufweist, dass im Bereich der Ausgangsöffnung (30) eine mindestens teilweise Immobilisierung des Insektes (14) im Sinne einer Verlangsamung des Insekts (14) erfolgt.

11. Vorrichtung gemäß Anspruch 10, **dadurch gekennzeichnet, dass** im Bereich der Ausgangsöffnung (30) des zweiten Abschnitts (24, 524) mindestens eine Öffnung (46, 546) zur Aufbringung der Substanz (48) angeordnet ist.

12. Verwendung einer Substanz (48), umfassend als chemisch aktive Verbindung mindestens ein Neonicotinoid, zum Schutz von Honigbienen vor räuberischen Insekten (14) in einem Verfahren gemäß einem der Ansprüche 1 bis 7.

## Claims

1. Method for protecting honeybees from predatory insects (14), wherein at least one of the insects (14) is captured and at least partially immobilized, at least one insecticidal substance (48) adhering to the insect (14) is applied to the chest of the insect (14) so that the insect (14) cannot completely remove the substance (48), and subsequently the insect (14) is mobilized.

2. Method according to claim 1, **characterized in that** the substance (48) comprises at least one chemically active compound selected from a group comprising neonicotinoids.

3. Method according to claim 2, **characterized in that** the at least one neonicotinoid is selected from a group comprising imidacloprid and acetamiprid.

4. Method according to one or more of claims 2 or 3, **characterized in that** the chemically active compound is applied to the body site (15) in an amount ranging from about 0.001 mg to about 1 mg.

5. Method according to any of the preceding claims, **characterized in that** the substance is applied to the insect (14) in an amount ranging from about 0.2 mg to about 20 mg.

6. Method according to one of the preceding claims, **characterized in that** the substance (48) is applied to the insect (14) by means of a syringe (50).

7. Method according to one of the preceding claims, **characterized in that** the at least partial immobilization is carried out by holding the insect (14) with a holding means having parts movable with respect to each other or by guiding the insect (14) from a first tubular portion (16) of a storage means (12) for the insect (14) into a passage (31, 531) of a second tubular portion (24, 524) of the storage means (12), which is formed with a reduced cross section compared to the first tubular portion (16) of the storage means (12).

8. Device (10, 500) for carrying out the method according to one of claims 1 to 7, **characterized in that** it comprises a storage means (12) with a tubular first section (16) and a tubular second section (24, 524) with an outlet opening (30), which is narrowed in cross-section in comparison with the first section (12), and a trap (200) for the insect (14) being arranged in front of the first section (16).

9. Device according to claim 8, **characterized in that** the second section (24) comprises a movable immobilizing means for at least partial immobilization of the insect (14), which comprises at least one opening (46, 546) for application of the substance (48).

10. Device according to one or more of claims 8 to 9, **characterized in that** the second section (24) has a cross-section which narrows towards the exit opening (30) in such a way that an at least partial immobilization of the insect (14) occurs in the region of the exit opening (30) in the sense of a deceleration of the insect (14).

11. Device according to claim 10, **characterized in that** at least one opening (46, 546) for the application of the substance (48) is arranged in the region of the outlet opening (30) of the second section (24, 524).

12. Use of a substance (48) comprising as a chemically active compound at least one neonicotinoid for protecting honey bees from predatory insects (14) in a method according to any one of claims 1 to 7.

## Revendications

1. Procédé de protection des abeilles contre les insectes prédateurs (14), au moins l'un desdits insectes (14) étant capturé et au moins partiellement immobilisé, au moins une substance insecticide (48) adhérant audit insecte (14) étant appliquée sur la poitrine dudit insecte (14) de sorte que ledit insecte (14) ne puisse pas enlever complètement ladite substance (48), et ensuite ledit insecte (14) étant mobilisé.

2. Procédé selon la revendication 1, **caractérisé en ce que** ladite substance (48) comprend au moins un composé chimiquement actif choisi dans un groupe comprenant les néonicotinoïdes.

3. Procédé selon la revendication 2, **caractérisé en ce que** ledit au moins un néonicotinoïde est choisi dans un groupe comprenant l'imidaclopride et l'acétamipride.

4. Procédé selon une ou plusieurs des revendications 2 ou 3, **caractérisé en ce que** ledit composé chimiquement actif est appliqué en une quantité dans une plage d'environ 0,001 mg à environ 1 mg sur un site corporel (15).

5. Procédé selon l'une des revendications précédentes, **caractérisé en ce que** ladite substance est appliquée en une quantité dans une plage d'environ 0,2 mg à environ 20 mg sur ledit insecte (14).

6. Procédé selon l'une des revendications précédentes, **caractérisé en ce que** ladite substance (48) est appliquée sur ledit insecte (14) au moyen d'une seringue (50).

7. Procédé selon l'une des revendications précédentes, **caractérisé en ce que** l'immobilisation au moins partielle est effectuée en maintenant ledit insecte (14) avec un moyen de maintien ayant des parties mobiles l'une par rapport à l'autre ou en guidant le dit insecte (14) depuis une première section tubulaire (16) d'un moyen de stockage (12) pour ledit insecte (14) dans un passage (31, 531) d'une deuxième section tubulaire (24, 524) dudit moyen de stockage (12), qui est formée avec une section transversale réduite par rapport à ladite première section tubulaire (16) dudit moyen de stockage (12).

8. Dispositif (10, 500) pour l'exécution du procédé selon l'une des revendications 1 à 7, **caractérisé en ce qu'**il comprend un moyen de stockage (12) avec une première section tubulaire (16) et une deuxième section tubulaire (24, 524) avec une ouverture de sortie (30), qui est rétrécie en section transversale par rapport à la première section (12), et un piège (200) pour ledit insecte (14) étant disposé devant ladite première section (16).

9. Dispositif selon la revendication 8, **caractérisé en ce que** la deuxième section (24) comprend un moyen d'immobilisation mobile pour l'immobilisation au moins partielle dudit insecte (14), qui comprend au moins une ouverture (46, 546) pour l'application de ladite substance (48).

10. Dispositif selon une ou plusieurs des revendications 8 à 9, **caractérisé en ce que** ladite deuxième section (24) présente une section transversale qui se rétrécit vers ladite ouverture de sortie (30) de telle sorte qu'une immobilisation au moins partielle dudit insecte (14) se produit dans la zone de ladite ouverture de sortie (30) dans le sens d'un ralentissement dudit insecte (14).

11. Dispositif selon la revendication 10, **caractérisé en ce qu'**au moins une ouverture (46, 546) pour l'application de ladite substance (48) est disposée dans la zone de ladite ouverture de sortie (30) de ladite deuxième section (24, 524).

12. Utilisation d'une substance (48) comprenant comme composé chimiquement actif au moins un néonicotinoïde pour la protection des abeilles contre les insectes prédateurs (14) dans un procédé selon l'une quelconque des revendications 1 à 7.
